Europäisches Patentamt

(19) European Patent Office

Office européen des brevets

(11) EP 0 905 260 A1

(12) EUROPEAN PATENT APPLICATION
published in accordance with Art. 158(3) EPC

(43) Date of publication:
31.03.1999 Bulletin 1999/13

(51) Int. Cl.$^6$: C21B 11/00

(86) International application number:
PCT/JP97/01142

(21) Application number: 97914586.9

(22) Date of filing: 02.04.1997

(87) International publication number:
WO 97/38141 (16.10.1997 Gazette 1997/44)

(84) Designated Contracting States:
DE FR GB

(30) Priority: 05.04.1996 JP 83976/96
05.04.1996 JP 83977/96
26.11.1996 JP 315189/96
29.11.1996 JP 320110/96
25.12.1996 JP 346352/96
25.12.1996 JP 346353/96

(71) Applicants:
• NIPPON STEEL CORPORATION
Tokyo 100-71 (JP)
• Nittetsu Plant Designing Corporation
Kitakyushu City, Fukuoka 804 (JP)

(72) Inventors:
• ICHIKAWA, Hiroshi,
Nippon Steel Corp.
Kitakyushu City, Fukuoka 804 (JP)

• TAKAHASHI, Makoto,
Nippon Steel Corp.
Kitakyushu City, Fukuoka 804 (JP)
• HORA, Shiro,
Nippon Steel Corp.
Kitakyushu City, Fukuoka 804 (JP)
• NAGATOMI, Masahide
Kitakyushu City, Fukuoka 804 (JP)
• HORIKAWA, Koetsu,
Nippon Steel Corp.
Kitakyushu City, Fukuoka 804 (JP)

(74) Representative:
VOSSIUS & PARTNER
Siebertstrasse 4
81675 München (DE)

(54) SMELTING REDUCTION APPARATUS AND METHOD OF OPERATING THE SAME

(57) A smelting reduction apparatus for producing a molten metal under a slag by charging a metal raw material, a carbon material and a flux into a furnace having a rectangular horizontal section, and blowing oxygen and/or oxygen-enriched gas into the slag through lower tuyeres provided in the furnace side walls and a method for operating the same are improved.

An inert gas is blown into the molten metal through bottom tuyeres provided near the center in the shorter side direction of the furnace bottom to ensure agitation of the slag near the center in the shorter side direction.

An inert gas is blown into the slag through lowest tuyeres which are provided in the furnace side wall portions below the lower tuyeres and not lower than the interface between the slag and the molten metal and directed at a downward angle of 0 to 45° from the horizontal direction and the slag directly above the molten metal is thus stirred, so that the relative speed between the slag and the molten metal is increased and the quantity of heat transfer from the slag to the molten metal is increased.

The lower tuyeres are directed in the lateral direction from the direction vertical to the longer sides of the furnace at an angle of 15 to 45° toward the direction opposite to that to a raw material charging inlet, so that the slag is also allowed to flow in the longer side direction of the furnace.

Fig.1

## Description

FIELD OF THE INVENTION

The present invention relates to a smelting reduction apparatus for directly producing a molten metal by charging a metal raw material, a carbon material and a flux into a furnace, and blowing pure oxygen and/or oxygen-enriched gas, and a method for operating the same.

BACKGROUND OF THE INVENTION

Smelting reduction is a process for directly producing a molten metal by charging a metal raw material, a carbon material and a flux into a furnace, and blowing pure oxygen and/or oxygen-enriched gas to reduce a metal oxide in the metal raw material, in a slag. In the process, a combustible gas at temperature as high as about 1,500 to 1,800°C is formed in the smelting reduction furnace.

Since a metal raw material such as an iron raw material is reduced in a molten slag in the smelting reduction process, it has been widely known that the reduction rate, namely the production rate of a molten pig iron is substantially proportional to the slag volume. The production rate of the molten pig iron may, therefore, be increased by increasing the horizontal sectional area of the molten slag or the height thereof.

However, when the height of the molten slag is excessively increased, the apparatus height of the smelting reduction furnace is increased, and conseqently the apparatus height of an apparatus for charging an iron raw material, a carbon material and a flux into the smelting reduction furnace and that of an apparatus for recovering a combustible gas vented from the smelting reduction furnace are increased. As a result, the height of a building for accommodating these apparatuses is increased, and the construction cost is markedly raised. Accordingly, it is a common practice to increase the horizontal sectional area of the molten slag.

The smelting reduction process has advantages, compared with the conventional blast furnace process, that the production amount can be very flexibly determined, that is, the production amount can be easily altered, that the apparatus can be easily stopped and restarted, and that the cost of the plant and equipment investment is low. The smelting reduction process has, therefore, been attracting attention recently as a small scale process for producing molten pig iron.

Such smelting reduction processes are generally classified into a two-step process (e.g., Japanese Patent Kokai Publication Nos. 57-120607, 61-96019, etc.) which comprises charging a pre-reduced iron raw material, a carbon material and a flux into a furnace, and pre-reducing an iron ore with CO gas and $H_2$ gas in a combustible gas generated in the furnace, and a one-step process (e.g., Japanese Patent Kokai Publication Nos. 1-502276, 63-65011, 63-65007, 61-279608, 60-9815, etc.) which comprises charging a non-reduced iron raw material, a carbon material and a flux into a furnace, reducing iron oxide in the iron raw material, completely burning in a waste heat boiler CO gas and $H_2$ gas in a combustible gas generated in the furnace, recovering the sensible heat and the latent heat of the combustible gas by vaporization, and conducting power generation, etc.

Although the two-step process has the advantage of good energy efficiency, compared with the one-step process, a pre-reducing furnace of a packed bed system, a fluidized bed system, etc. is required therein. Accordingly, the two-step process has the following disadvantages: the apparatus becomes complicated, the cost of plant and equipment investment becomes costly, the shape of the iron raw material is restricted because of maintaining the uniformity of reactions within the pre-reducing furnace (e.g., only an iron raw material in block can be used in the packed bed system, and only an iron raw material in powder can be used in the fluidized bed system). Attention has, therefore, been paid to the simple one-step process recently.

It has been widely known that the energy efficiency can be improved, that is, the unit requirement of the carbon material can be decreased in the one-step process by increasing the proportion of burning CO gas and $H_2$ gas, which is generated in the slag, in the furnace space above the slag (referred to as a secondary combustion zone hereinafter) (the proportion being referred to as an in-furnace secondary combustion rate, the in-furnace secondary combustion rate being defined as $(CO_2 \% + H_2O \%)/(CO_2 \% + CO \% + H_2O \% + H_2 \%)$), and effectively transferring the combustion heat to the slag.

However, the one-step process has a problem as described below. When stirring the slag in the upward and downward directions is insufficient, the quantity of heat transfer to the lower layer of the slag and the molten pig iron decreases, and the upper layer of the slag alone is heated. As a result, the temperature difference between the secondary combustion zone and the slag upper layer decreases, and the quantity of heat transfer from the secondary combustion zone to the slag is lowered. Consequently, even when the secondary combustion rate is increased, the magnitude of a decrease in the unit requirement of the carbon material is lowered.

In the one step process, since the quantity of heat transfer from the secondary combustion zone to the slag is decreased, a problem as described below arises. The atmosphere temperature of the secondary combustion zone

2

rises, and the wear amount of refractories increases sharply when the furnace wall of the secondary combustion zone is lined with refractories. Alternatively, when the furnace wall thereof is lined with a water-cooled panel, the quantity of heat extracted by the water-cooled panel increases sharply.

In order to solve such problems, Japanese Patent Kokai Publication No. 1-502276 proposes a furnace structure wherein pure oxygen and/or oxygen-enriched gas is blown into the slag through lower tuyeres which are provided in such a manner that the tuyeres penetrate the respective two longer sides of the furnace having a rectangular horizontal section in the horizontal direction toward the slag.

However, the furnace structure as proposed above has a first problem as described below.

As described above, it is a common practice to increase the horizontal sectional area of the molten slag when the production rate of the molten pig iron is to be increased. In the furnace structure wherein pure oxygen and/or oxygen-enriched gas is blown into the slag through lower tuyeres which are provided in such a manner that the tuyeres penetrate the two respective longer sides of the furnace having a rectangular horizontal section in the horizontal direction toward the slag, increasing the horizontal sectional area of the molten slag, namely the horizontal sectional area of the furnace at the height of the lower tuyeres causes a problem as described below. When the length $L_1$ of the shorter sides of the horizontal section at the height of the lower tuyeres is increased, pure oxygen and/or oxygen-enriched gas blown into the slag through the lower tuyeres mentioned above does not reach the central portion in the shorter side direction of the horizontal section at the height of the lower tuyeres, and as a result the molten slag near the central portion in the shorter side direction of the horizontal section is not sufficiently stirred.

That is, when the coverage in the horizontal direction of the gas blown into the slag through the lower tuyeres is defined as $L_3$, the length $L_1$ in the shorter side direction of the horizontal section at the height of the lower tuyeres must be set as follows: $L_1 \le 2 \times L_3$. When $L_1 > 2 \times L_3$, pure oxygen and/or oxygen-enriched gas blown into the slag through the lower tuyeres does not reach the central portion in the shorter side direction thereof, and the problem that the molten slag near the central portion in the shorter side direction thereof is not sufficiently stirred arises.

Accordingly, in order to increase the horizontal sectional area $S (= L_1 \times L_2)$ at the height of the lower tuyeres, only the length $L_2$ of the longer side of the horizontal section at the height of the lower tuyeres must be increased.

In order to increase the production rate of a molten pig iron, for example, twice, $L_2$ must be increased twice, and problems as described below arise.

*    The arrangement of the furnace within a factory building becomes difficult.
*    It becomes difficult to absorb the thermal expansion of the furnace and the refractories.
*    Ensuring the uniformity of reactions in the longer side direction of the furnace having a rectangular horizontal section becomes difficult.

Moreover, in order to solve the above-mentioned problems, Japanese Patent Kokai Publication No. 60-9815 proposes a process of smelting reduction comprising charging a molten pig iron into a melting furnace which is equipped with bottom-blowing tuyeres and an oxygen top blowing lance and the wall of which is lined with refractories, and controlling the amount of a gas blown through the bottom-blowing tuyeres while the slag composition and the amount of free carbon material are being restricted.

However, in order to reduce the metal raw material and ensure the quantity of heat transfer from the secondary combustion zone to the slag in the process, the slag must be stirred strongly. However, transmitting the stirring force to the slag through agitation of the molten metal is very difficult in the refining operation. That is, since the amount of the gas for stirring the molten metal is extremely large, the molten metal temperature is lowered when a non-oxygen gas is used, and, on the other hand, the molten metal is oxidized when oxygen is contained in the stirring gas to maintain the molten metal temperature. The process, therefore, poses a dilemma.

In order to solve these problems, Japanese Patent Kokai Publication No. 61-279608 proposes a process using a smelting reduction furnace equipped with tuyeres through which an inert gas is blown to stir the metal below the metal bath surface, tuyeres which are situated above the metal bath surface and below the slag surface and through which oxygen or oxygen-enriched gas is blown into the slag, and lances for top blowing oxygen, and lined with refractories.

However, problems as described below still remain unsolved even in this process because an inert gas is blown through the tuyeres below the metal bath surface to stir the metal.

(1) Since particles of the molten metal are blown up into the slag by the inert gas blown through the tuyeres below the metal bath surface, the molten metal is reoxidized with oxygen or oxygen-enriched gas blown into the slag through the tuyeres situated above the metal bath surface and below the slag surface. Accordingly, the improvement of the reduction rate, namely, the improvement of the production rate is hindered.

(2) Since particles of the molten metal are blown up and suspended in the slag by the inert gas blown through the tuyeres below the metal bath surface, the heat content and the heat conductivity of the slag increase. Accordingly, the furnace wall contacted with the slag cannot be made water-cooled structures, but it must be made refractory structures. As a result, the wear of the refractories caused by the slag becomes significant, and repairing and patching must be frequently conducted.

(3) Since the heat content and the heat conductivity of the slag increase, the tuyeres situated above the metal bath surface and below the slag surface cannot be made water-cooled structures, that is, expendable tuyeres must be employed. Accordingly, the tuyeres must be frequently exchanged.

(4) Since the heat content and the heat conductivity of the molten metal is large, the tuyeres below the metal bath surface cannot be made water-cooled structures, that is, expendable tuyeres must be employed. Accordingly, the tuyeres must be frequently exchanged.

(5) Since the wear of refractories around the tuyeres below the metal bath surface is significant, they must be frequently repaired or patched.

In contrast to the process mentioned above, Japanese Patent Kokai Publication No. 1-502276 mentioned above proposes a furnace structure comprising lower tuyeres which penetrate the furnace in the horizontal direction toward a slag and through which pure oxygen and/or oxygen-enriched gas is blown into the slag, upper tuyeres which penetrate the furnace toward a secondary combustion zone and through which pure oxygen and/or oxygen-enriched gas is blown into the secondary combustion zone, and a water-cooled panel with which an area of the furnace inner surface facing the secondary combustion zone and the slag is lined. Since the furnace structure has no abovementioned tuyeres below the metal bath surface through which an inert gas is blown to stir the metal, the problems (1) to (5) mentioned above are all solved.

However, the furnace structure proposed above has a second problem as described below.

Since the furnace structure has no tuyeres below the metal bath surface through which an inert gas is blown to stir the metal as described above, the molten metal bath situated below the lower tuyeres and the interface between the molten metal and the slag is extremely calm though the slag portion situated above the lower tuyeres is strongly stirred.

Consequently, the quantity of heat transfer from the secondary combustion zone to the slag is large, and the reduction reaction proceeds in the slag. However, the quantity of heat transfer from the slag to the molten metal is small, and as a result the temperature difference between the slag and the molten metal increases.

The temperature of the molten metal discharged from the furnace is defined owing to the limitations in the following steps in the smelting reduction apparatus. As a result, when the temperature difference between the slag and the molten metal is large, the slag temperature must be raised in accordance with the temperature difference. The temperature of the combustible gas vented from the furnace rises in accordance with the raised temperature.

Accordingly, when there is a temperature difference of, for example, about 100°C between the slag and the molten metal, an extra energy for raising the temperatures of the slag and the combustible gas vented from the furnace by about 100°C is required, as compared with cases where there is no temperature difference therebetween. As a result, the unit requirements of the carbon material and oxygen must be increased in accordance with the extra energy.

Furthermore, when the temperatures of the combustible gas vented from the furnace and the slag temperature are raised by about 100°C as mentioned above, the heat quantity extracted from a water-cooled panel, if the area of the furnace inner wall facing the secondary combustion zone and the slag is lined with the water-cooled panel, increases. As a result, the unit requirements of the carbon material and oxygen increase further.

The quantity of the extracted heat increases because the heat transfer of the portion of the water-cooled panel facing the second combustion zone is mainly based on radiation heat transfer and is approximately proportional to (temperature of combustible gas)$^4$ - (temperature of water-cooled panel)$^4$, and because the heat transfer of the portion of the water-cooled panel facing the slag is mainly based on convection heat transfer and is approximately proportional to (slag temperature) - (temperature of water-cooled panel).

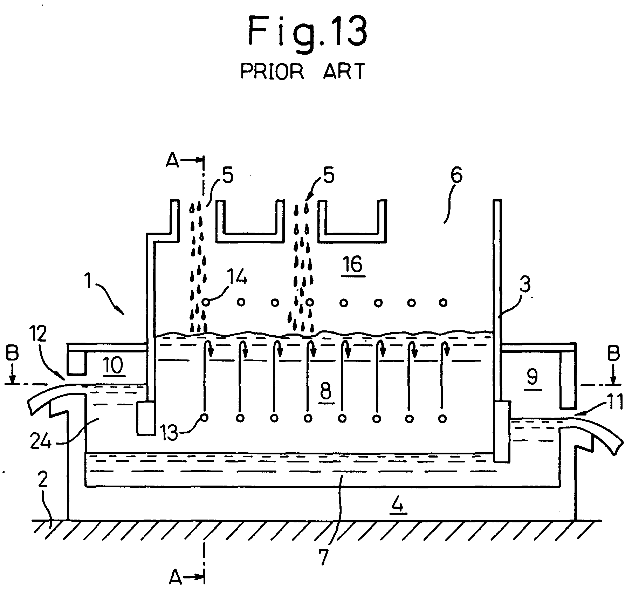

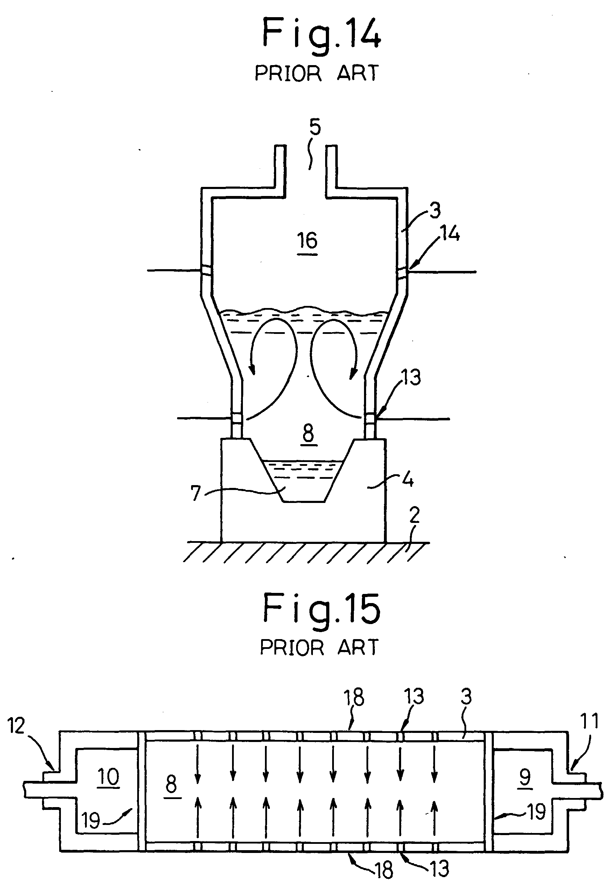

Furthermore, the prior art proposed in Japanese Patent Kokai Publication No. 1-502276 mentioned above has a third problem as described below. Fig. 13 is a vertical sectional view showing a furnace structure of a smelting reduction apparatus of the prior art proposed therein. Fig. 14 is a sectional view along line A-A in Fig. 13, and Fig. 15 is a sectional view along line B-B in Fig. 13.

A furnace 1 is fixed to a base 2, and the inner wall of the furnace is lined with a water-cooled panel 3 and refractories 4. The top of the furnace is provided with a raw material charging inlet 5 for charging an iron raw material, a carbon material and a flux and a gas outlet 6 for a combustible gas generated from the furnace. A molten pig iron 7 accumulates at the bottom of the furnace 1, and a slag (a foaming slag) 8 having a specific gravity smaller than the molten pig iron 7 accumulates thereon. The molten pig iron 7 and the slag are continuously or intermittently discharged from a tap hole 11 through a molten pig iron pool 9 and from a cinder notch 12 through a slag pool 10, respectively.

Iron oxides (FeO and $Fe_2O_3$) in the iron raw material charged from the raw material charging inlet 5 are reduced by a carbon component in the carbon material charged from the same raw material charging inlet 5 in a slag 8 by reactions of the following formulas:

$$FeO + C \rightarrow Fe + CO \text{ (endothermic reaction)} \qquad (1)$$

$$Fe_2O_3 + 3C \rightarrow 2Fe + 3CO \text{ (endothermic reaction)} \qquad (2)$$

Since the reduction reactions of the formulas (1), (2) are caused in the slag 8 in the smelting reduction process, it has been known widely that the reduction rate, namely the production rate of the molten pig iron is approximately proportional to the slag volume.

Further, part of the carbon component in the carbon material charged from the raw material charging inlet 5 is reacted with oxygen blown into the foaming slag 8 through lower tuyeres 13 which are provided in such a manner that the tuyeres penetrate the furnace 1 toward the slag 8, by a reaction of the formula

$$C + 1/2O_2 \rightarrow CO \text{ (exothermic reaction)} \qquad (3)$$

The present inventors have conducted a test operation, etc., and confirmed that since foams are convected in the foaming slag 8 with CO gas generated in the foaming slag 8 by the reactions of the formulas (1), (2) and (3), the specific gravity of the portion of the foaming slag (8) situated above the lower tuyeres 13 within the furnace becomes from 1/2 to 1/3 of that of a repressed slag 24 in the slag pool 10.

Furthermore, CO gas generated in the slag 8 by the reactions of the formulas (1) to (3) and the hydrogen component in the carbon material are oxidized with oxygen blown into a secondary combustion zone 16 through upper tuyeres 14 provided in such a manner that the tuyeres penetrate the furnace 1 toward the upper space 16 above the foaming slag 8, namely the secondary combustion zone 16, by reactions of the following formulas:

$$CO + 1/2O_2 \rightarrow CO_2 \text{ (exothermic reaction)} \qquad (4)$$

$$H_2 + 1/2O_2 \rightarrow H_2O \text{ (exothermic reaction)} \qquad (5)$$

The reactions of the formulas (4) and (5) are termed in-furnace secondary combustion. It has been widely known that the degree of the secondary combustion is expressed in terms of an in-furnace combustion rate defined by the formula (6) described below, and that the secondary combustion rate is increased by increasing the flow rate of oxygen blown into the secondary combustion zone 16 through the upper tuyeres 14.

$$\text{In-furnace secondary combustion rate} = (CO_2\% + H_2O\%)/(CO_2\% + CO\% + H_2O\% + H_2\%) \qquad (6)$$

wherein $CO_2\%$, $CO\%$, $H_2O\%$ and $H_2\%$ represent respective volume fractions in the combustible gas in the gas outlet (6).

When the In-furnace secondary combustion rate is increased, part of the heat of reaction of the reactions of the formulas (4) and (5) in the secondary combustion zone 16 is transferred to the slag 8, and the carbon material unit requirement is decreased by decreasing the carbon component necessary for the exothermic reaction of the formula (3) in the slag.

As described above, in order to increase the magnitude of a decrease in the carbon material unit requirement when the in-furnace secondary combustion rate is increased, increasing the quantity of heat transfer of the heat of reactions of the formulas (4) and (5) in the secondary combustion zone 16 to the slag 8, namely sufficiently stirring the slag in the upward and downward directions is effective. The heat transfer from the secondary combustion zone 16 to the slag 8 is caused by radiation heat transfer and convection heat transfer, and the quantity of heat transfer from the secondary combustion zone 16 to the slag 8 is also a function of a difference between the atmosphere temperature of the secondary combustion zone 16 and the temperature of the slag 8. Accordingly, making the temperature difference between the molten pig iron 7 and the slag 8 as small as possible and lowering the temperature of the slag 8 are also extremely effective.

Since the furnace structure has no tuyeres below the bath surface of the molten pig iron for blowing an inert gas for stirring the metal, as described above, all the problems (1) to (5) as mentioned above are solved.

However, even such furnace structures as shown in Fig. 13 to Fig. 15 still have the following problems.

(a) In the furnace structure in which pure oxygen and/or oxygen-enriched gas is blown into the slag through the lower tuyeres 13 provided in such a manner that the tuyeres penetrate the respective two longer sides 18 of the furnace having a rectangular horizontal section in the direction vertical to the longer sides 18, although the slag 8 flows in the upward and downward directions (arrows in Fig. 13) and in the direction of the shorter sides 19 (arrows in Fig. 15) of the furnace having a rectangular horizontal section, the slag does not flow substantially in the direction of the longer sides 18 thereof.

(b) Accordingly, when only a single raw material charging inlet 5 for charging an iron raw material, a carbon material and a flux is provided above the furnace 1, the concentrations of the iron raw material and the carbon material tend to vary from the site within the slag directly below the raw material charging inlet to a site therewithin remote from the raw material charging inlet 5. When the production amount is increased, that is, the longer sides 18 of the furnace having a rectangular horizontal section are extended, a plurality of the raw material charging inlets 5 must be provided. As a result, a plurality of raw material charging apparatuses must be installed, and the installation cost is increased.

(c) Furthermore, when a plurality of the raw material charging inlets are provided, the distance between the raw material charging inlet and the gas outlet 6 must be shortened as shown in Fig. 13. When the particle sizes of the metal raw material and the carbon material are small, a problem that the amounts of the metal raw material and the carbon material which enter the flow of the combustible gas generated from the furnace 1 and are directly scattered from the raw material charging inlet 5 to the gas outlet 5 are increased, arises.

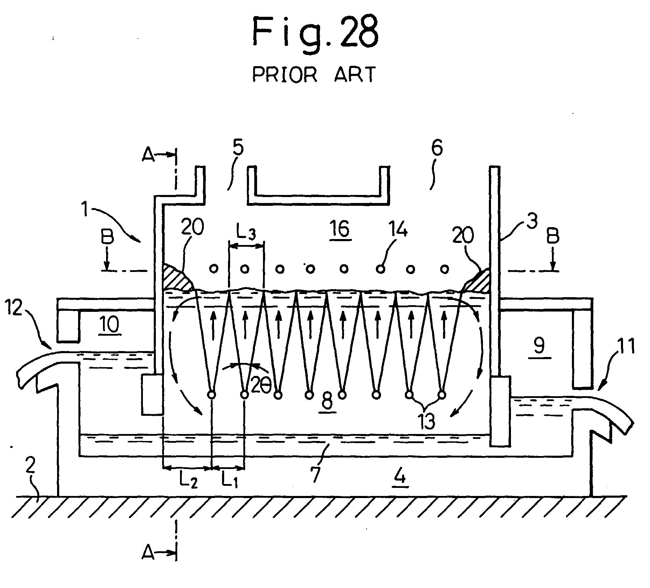

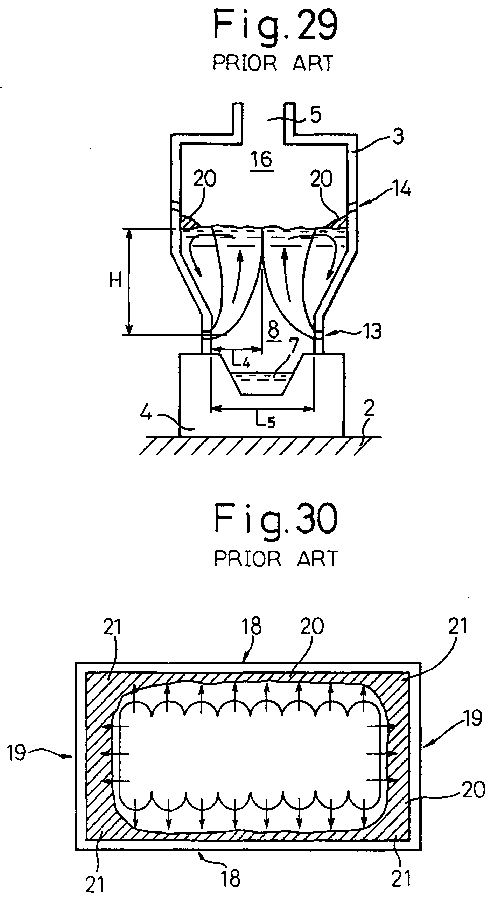

Furthermore, the prior art proposed in Japanese Patent Kokai Publication No. 1-502276 has a fourth problem. Fig. 28 is a vertical sectional view showing the furnace stucture of the prior art proposed in Japanese Patent Kokai Publication No. 1-502276, from another standpoint. Fig. 29 is a sectional view along line A-A in Fig. 28. Fig. 30 is a sectional view along line B-B in Fig. 28. In Figs. 28 to 30, portions corresponding to those in Figs. 13 to 15 are followed by the same reference numerals.

As described above, in order to increase the magnitude of a decrease in the carbon material unit requirement when the in-furnace secondary combustion rate is increased, increasing the quantity of heat transfer of the heat of reactions of the formulas (4) and (5) in the secondary combustion zone 16 to the slag 8, namely sufficiently stirring the slag in the upward and downward directions is effective.

On the other hand, it has been widely known that when the gas is blown through tuyeres provided at the bottom of the furnace in the vertical direction, toward the molten pig iron 7 and the foaming slag 8, the gas has a constant spread angle $2\theta$ (about 20°) regardless of the magnitude of the gas flow rate (Iron and Steel, **61**, No. 6 (1981), etc.). The present inventors have conducted a model test using water in place of the slag 8 and confirmed that even when the gas is blown into the slag 8 through the lower tuyeres 13 provided in the direction vertical to the side wall of the furnace, namely in the direction horizontal to the bottom surface of the furnace as shown in Fig. 29, the gas has a constant spread angle $2\theta$ (about 20°) regardless of the magnitude of the gas flow rate. Accordingly, the spread width $L_3$ of the gas blown through the lower tuyeres 13, on the top surface of the slag 8 can be expressed as follows: $L_3 = 2H \times \tan \theta$, wherein H is the height of the bath surface of the slag 8 from the lower tuyeres 13, and the slag portion within the gas spread width $L_3$ is sufficiently stirred.

Accordingly, in the prior art proposed in Japanese Patent Kokai Publication No. 1-502276, in order to stir the slag almost homogeneously over the entire area except for the portions contacted with the shorter sides 19 of the rectangular furnace, that is, in order to generate ascending flows of the slag, the spacing $L_1$ of the lower tuyeres 13 is made approximately equal to the $L_3$ mentioned above.

On the other hand, it has been widely known from Iron and Steel, **61**, No. 4 (1975), etc. that when a gas is blown in the horizontal direction through tuyeres toward the molten pig iron 7 and the slag 8, the coverage $L_4$ of the blown gas in the horizontal direction is proportional to the 1/3 power of an Fr number.

The Fr number is derived from the following formula:

$$\text{Fr number} = \{\rho g/(\rho l-\rho g)\} \times \{Vg^2/g \cdot d)\} \tag{7}$$

wherein $\rho g$ is a gas density, $\rho l$ is a slag density, Vg is an injection speed of the gas, d is a diameter of the tuyeres, and g is gravitational acceleration. The coverage $L_4$ in the horizontal direction of the blown gas can, therefore, be increased when the injection speed Vg of the gas is increased by increasing the amount of the gas, or decreasing the diameter d of the tuyeres. Since there are limitations on the amount and the pressure of the blown gas, there is naturally a limitation on the method.

Accordingly, in the prior art proposed in Japanese Patent Kokai Publication No. 1-502276, to stir the slag almost uniformly , that is,to generate ascending flows over the entire area except for the portions contacted with the longer sides 18 of the rectangular furnace, the length $L_5$ in the shorter side direction of the horizontal section of the furnace at the height of the lower tuyeres is made approximately equal to twice the coverage ($2 \times L_4$) in the horizontal direction of the blown gas. The length in the shorter side direction of the horizontal section at the height of the lower tuyeres is, therefore, made small compared with that in the upper portion of the furnace, and part of the walls forming the longer sides of the furnace are formed with slopes as shown in Fig. 29.

Since such a furnace structure has no tuyeres for blowing an inert gas, below the bath surface of the molten pig iron, all the problems (1) to (5) mentioned above have been solved.

However, even the furnace structure shown in Figs. 28 to 30 still has problems as described below.

In such a furnace structure, as described above, the metal raw material and the carbon material are added to the molten slag 8 within the furnace 1 from the raw material charging inlet 5 provided thereabove. The metal raw material, namely metal oxide is melted and a reduction reaction wish the carbon material is caused in the slag 8. In order to promote the reduction reaction, it is important that the carbon material 20 having a low specific gravity, as compared with the slag 8, be included and suspended in the slag 8.

In the furnace structure in which pure oxygen and/or oxygen-enriched gas is blown into the slag through the lower tuyeres 13 provided in such a manner that the tuyeres penetrate the two longer sides 18 of the furnace having a rectangular horizontal section in the direction vertical to the longer sides 18 toward the slag, attention is paid to a section in the longer side direction of the furnace 1, as shown in Fig. 28. Since the spacing $L_1$, between of the lower tuyeres 13 is set approximately at the spread width $L_3$ on the top surface of the slag 8 of a gas blown through the lower tuyeres 13 as described above, substantially uniform ascending flows of the slag are generated over the entire area except for the portions contacted with the shorter sides 19 of the furnace. Flows in the horizontal direction from the furnace center toward the shorter sides of the furnace are generated in the bath surface portion of the slag 8, and ascending flows are generated in the portions near the shorter sides 19. Accordingly, the carbon material 20 having a low specific gravity, as compared with the molten slag 8, is pushed to the directions of shorter sides 19 of the furnace by the above-mentioned horizontal flows as shown in Fig. 28. As a result, the carbon material 20 floats and is retained near the shorter sides 19 of the furnace in the bath surface portion of the slag 8. Although ascending flows of the slag 8 are generated near the shorter sides 19 of the furnace, the carbon material 20 is prevented from entering thee descending flows of the slag 8 and being included therein owing to the friction resistance of the furnace side walls, namely the shorter sides 19 of the furnace.

Furthermore, attention is now paid to a section of the shorter side direction of the furnace 1, as shown in Fig. 29. Ascending flows of the slag 8 are generated in the central portion of the furnace, and flows in the horizontal direction from the furnace center toward the longer sides 18 of the furnace are generated in the bath surface portion of the slag 8. Moreover, descending flows are generated near the longer sides 18 of the furnace. Accordingly, the carbon material 20 having a low specific gravity, as compared with the molten slag 8, is pushed in the directions of the longer sides 18 of the furnace by the above-mentioned horizontal flows as shown in Fig. 30. As a result, the carbon material 20 floats and is retained near the longer sides 18 of the furnace in the bath surface portion of the slag 8. Although ascending flows of the slag 8 are generated near the longer sides 18 of the furnace, the carbon material 20 is prevented from entering the descending flows of the slag 8 and being included therein owing to the friction resistance of the furnace side walls, namely the longer sides 18 of the furnace.

As described above, the carbon material 20 floats and is retained around the entire periphery of the longer sides 18 and the shorter sides 19 of the furnace in bath surface portion of the slag 8 as shown in Fig. 30. Moreover, a particularly large amount of the carbon material 20 tends to float and be retained in corners 21 of the furnace In the bath surface portion of the slag 8 owing to the two mutual actions as mentioned above.

Furthermore, almost uniform ascending flows of the slag 8 are generated over the entire area except for the portions contacted with the shorter sides 19 of the rectangular furnace, and flows in the horizontal direction from the furnace center toward the shorter sides 19 of the furnace are generated in the bath surface portion of the slag 8, followed by generating ascending flows near the shorter sides 19 of the furnace. As a result, there is a problem that the amount of the carbon material 20 suspended in the slag 8 in the central portion in the direction of the longer sides 18 is particularly small, compared with the suspended amount in the portions near the shorter sides 19 of the furnace where the carbon material 20 enters the descending flows of the slag 8 and descends.

The above-mentioned tendency has been confirmed by the present inventors by conducting a model test using water in place of the slag 8 and a material such as cork having a low specific gravity, as compared with water, in place of the carbon material.

Since the carbon material 20 floats and is retained around the entire periphery of the longer sides 18 and the shorter sides 19 of the furnace in the bath surface portion of the slag 8 as described above, there arises a problem that the amount of the carbon material 20 included and suspended in the molten slag 8 is relatively small and as a result the rate of the reduction reaction of the metal material, namely the metal oxide with the carbon material 20 in the molten slag 8 is relatively low.

Furthermore, since the amount of the carbon material 20 suspended in the slag 8 in the central portion in the direction of the longer sides 18 of the furnace is particularly small compared with that in the portions near the shorter sides 19 of the furnace where the carbon material 20 enters the descending flows of the slag and descends, the reduction reaction of the metal material, namely the metal oxide and the carbon material 20 in the slag 8 tends to exhibit a high rate in the portions near the shorter sides 19 of the furnace compared with that in the central portion in the direction of the longer sides 18 of the furnace. The reduction reaction is an endothermic one as described above, and heat must be supplied during the reaction. However, in a furnace where the shorter sides 19 and the longer sides 18 are lined with the water-cooled panel 3, the slag portions near the shorter sides 19 and the longer sides 18 of the furnace are cooled therewith. It is, therefore, not preferred that the reduction reaction rate be high in the portions near the shorter sides 19 of the furnace, compared with that in the central portion in the direction of the longer sides 18 of the furnace.

The prior art proposed by Japanese Patent Kokai Publication No. 1-502276 has a fifth problem.

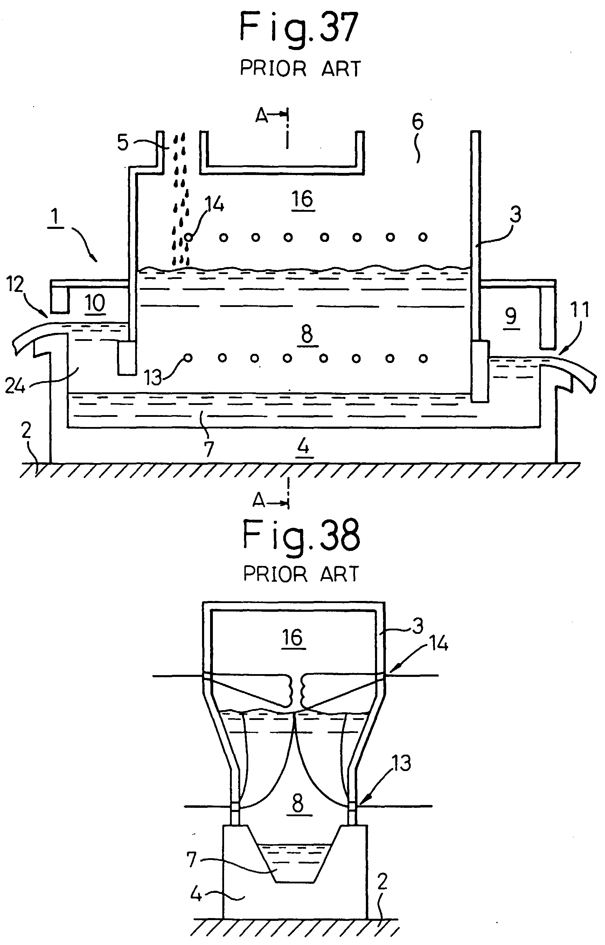

Fig. 37 is a vertical sectional view showing the furnace structure of the prior art proposed in Japanese Patent Kokai Publication No. 1-502276, from another standpoint. Fig. 38 is a sectional view along line A-A in Fig. 37.

As described above, the quantity of heat transfer from the upper space 16 to the foaming slag 8 is a function of a difference between the atmospheric temperature of the upper space 16 and the temperature of the slag 8. To increase the quantity of heat transfer, it is, therefore, necessary that there should be a difference therebetween to some extent.

Accordingly, when there is a temperature difference of, for example, about 200°C between the atmosphere of the upper space 16 and the foaming slag 8, an extra energy for raising the temperature of the combustible gas vented from the furnace by about 200°C is required, as compared with the case where there is no temperature difference therebetween. As a result, the unit requirements of the carbon material and oxygen are to be increased in accordance with the extra energy.

Furthermore, when the temperature of the combustible gas vented from the furnace is raised by about 200°C as mentioned above, the heat quantity extracted from the water-cooled panel 3, if the area of the furnace inner wall facing the upper space 16 is lined with the water-cooled panel increases. As a result, the unit requirements of the carbon material and oxygen increase further. The quantity of the extracted heat increases because the heat transfer of the portion of the water-cooled panel 3 facing the second combustion zone 16 is mainly based on radiation heat transfer and is approximately proportional to (temperature of combustible gas)$^4$ - (temperature of water-cooled panel)$^4$.

Moreover, the upper space 16 must have a volume to some extent in order to effect uniformly the secondary combustion reactions of the formulas (1) and (2) in the upper space 16, and the area of the water-cooled panel 3 facing the upper space 16 is inevitably increased to some extent. As a result, the quantity of heat extracted from the water-cooled panel 3 increases, and the unit requirements of the carbon material and oxygen are increased further.

Furthemore, the prior art proposed by Japanese Patent Kokai Publication No. 1-502276 has a sixth problem as described below.

The smelting reduction reaction is inferred to take place mainly on the interface between the foaming slag 8 and the carbon material. The reaction is, therefore, regarded to be proportional to the area of the interface therebetween. Accordingly, in order to improve the productivity in the smelting reduction process, a carbon material having a small particle size or a powder form is preferably used. Moreover, the use of a metal raw material having a small particle size or powder form (and likely to be easily melted) is preferred because it is rapidly melted and becomes a slag. The prices of the metal raw material and the carbon material in powder are currently lower than those of the metal raw material and the carbon material in block. It is, therefore, very effective in reducing the production cost to use these low price materials in powder form.

(a) However, in the prior art proposed in Japanese Patent Kokai Publication No. 1-502276, the metal raw material and the carbon material are charged through the raw material charging inlet 5 provided on the furnace 1. Accordingly, when these materials are in powder form, in the course of their dropping from the raw material charging inlet 5 to the foaming slag 8, the proportion of these materials carried away by the ascending current of the combustible gas generated from the slag before these materials reach the foaming slag 8 increases. Moreover, since the carbon material in powder has a low specific gravity, compared with the slag, it floats on the top surface of the slag even after reaching the foaming slag 8, and the proportion of the carbon material carried away by the ascending current of the combustible gas generated from the slag increases.

As described above, the prior art also has the following problems (b), (c) and (d):

(b) the slag 8 does not flow substantially in the direction of the longer sides 18 of the furnace,

(c) since the concentrations of the iron raw material and the carbon material tend to be nonuniform, a plurality of raw material charging apparatuses are required when the longer sides 18 are extended, and the installation cost increases, and

(d) when a plurality of raw material charging inlets are used, the metal raw material and the carbon material having small particle sizes tend to be scattered and carried away directly from the raw material charging inlets 5 to the gas outlet 6 as shown in Fig. 13.

On the other hand, smelting reduction apparatuses and methods for operating the same wherein a molten pig iron is charged into a melting furnace equipped with bottom blowing tuyeres below the metal bath surface and top blowing lances and lined with refractories on the furnace wall, and gases such as oxygen and/or materials such as a metal raw material and a carbon material in powder are blown through the top blowing lances have been proposed in Japanese Patent Kokoku Publication No. 6-89383, Japanese Patent Kokai Publication Nos. 62-224619, 62-224620 and 62-228413, etc.

Since gases such as oxygen and/or a metal raw material and a carbon material in powder are blown through the top blowing lances in these apparatuses and the operation methods, the problem (a) of the prior art proposed by Japanese Patent Kokai Publication No. 1-502276 is solved. However, since an inert gas is blown through the tuyeres below the metal bath surface to stir the metal, a problem, which is similar to that of the prior art proposed by Japanese Patent Kokai Publication No. 61-279608 mentioned above, as mentioned below still remains.

Particles of the molten metal are blown up into the slag by the gas blown through the tuyeres below the metal bath surface, and reoxidized with oxygen or oxygen-enriched gas blown into the slag through the upper lances, whereby the improvement of the reduction rate, namely the production rate is retarded and the amount of the metal component scattered together with the combustible is increased.

Furthemore, the problems (2) to (5) of the prior art proposed in Japanese Patent Kokai Publication No. 61-279608, etc. still remain unsolved.

DISCLOSURE OF THE INVENTION

A first object of the present invention is to provide a smelting reduction apparatus with which an increase or decrease in the production amount can be flexibly corresponded, and in which the shorter sides of the horizontal section at the height of the lower tuyeres mentioned above can be extended at the time of increasing the production amount of a molten pig iron.

A second object of the present invention is to provide a smelting reduction apparatus wherein the slag portion directly above the interface between the molten metal and the slag is stirred without blowing a gas for stirring the metal through tuyeres below the metal bath surface, the relative speed between the slag and the molten metal is thus increased, the quantity of heat transfer from the slag to the molten metal is thus increased, and the temperature difference between the slag and the molten metal is consequently decreased.

A third object of the present invention is firstly to provide a smelting reduction apparatus which may be operated with a single raw material charging inlet even when the production amount is increased, that is, the longer sides of the furnace having a rectangular horizontal section are extended, by allowing the slag to flow in the longer side direction thereof.

A third object of the present invention is secondly to provide a smelting reduction apparatus wherein the slag portion directly above the interface between the molten pig iron and the slag is stirred without blowing a gas for stirring the metal through tuyeres below the molten pig iron bath surface, the relative speed between the slag and the molten pig iron is thus increased, the quantity of heat transfer from the slag to the molten pig iron is thus increased, and the temperature difference between the slag and the molten pig iron is consequently decreased.

A fourth object of the present invention is firstly to provide a smelting reduction apparatus in which a reduction reaction of the metal raw material, namely the metal oxide with the carbon material in the molten slag may be promoted by preventing the carbon material from floating and being retained in a large amount in the bath surface portion of the slag near the furnace sides, namely near the longer sides and the shorter sides of the furnace having a rectangular horizontal section, and thus increasing the amount of the carbon material which is included and suspended in the slag.

A fourth object of the present invention is secondly to provide a smelting reduction apparatus in which a reduction reaction of the metal raw material, namely the metal oxide with the carbon material may be promoted by increasing the amount of the carbon material suspended in the slag in the central portion in the longer side direction of the furnace and making the concentration of the suspended carbon material in the slag uniform, or by making the concentration of the carbon material in the central portion therein high compared with that in portions near the shorter sides of the furnace.

A fifth object of the present invention is to provide a method for operating a smelting reduction apparatus wherein the quantity of sensible heat of the combustible gas and the quantity of extracted heat from the water-cooled panel facing the upper space are decreased by decreasing a difference between the atmospheric temperature of the upper space and the foaming slag, and as a result the unit requirements of the carbon material and oxygen may be reduced, and a furnace structure of the apparatus.

A sixth object of the present invention is to provide a method for operating a smelting reduction apparatus with which the production cost is reduced and the productivity is improved by effectively using a metal raw material and a carbon material in powder at low cost in good yields, and a furnace structure of the apparatus.

A further object of the sixth invention is to provide a furnace structure having only one or two raw material charging inlets even when the production amount is increased, that is, the longer sides of the furnace having a rectangular horizontal section are extended.

To achieve the first object, a first invention provides a furnace structure of a smelting reduction apparatus for directly producing a molten metal by charging a metal raw material, a carbon material and a flux into the furnace having a rectangular horizontal section, and blowing oxygen and/or oxygen-enriched gas into a slag through lower tuyeres provided in such a manner that the lower tuyeres penetrate the two longer sides of the rectangular furnace in the horizontal direction toward the slag, characterized in that bottom tuyeres are provided near the central portion in the shorter side direction of the furnace bottom, through which tuyeres an inert gas is blown into the molten metal.

In the furnace structure of a smelting reduction apparatus mentioned above, the length $L_1$ in the shorter side direction of the horizontal section of the furnace at the height of the lower tuyeres is desirably set as follows:

$$2 \times L_3 < L_1 \leq 2 \times (L_3 + H \times \tan \theta)$$

where H is the total height of the molten metal and the slag, $L_3$ is a coverage in the horizontal direction of the gas blown into the slag through the lower tuyeres and $2\theta$ is a spread angle of the gas blown into the slag through the bottom tuyeres.

Since the bottom tuyeres are provided near the central portion in the shorter side direction of the furnace bottom and an inert gas is blown into the molten pig iron therethrough in the furnace structure of the smelting reduction apparatus of the first invention, the length in the shorter side direction of the horizontal section at the height of the lower tuyeres, namely the length in the shorter side direction of the furnace can be increased, and the production amount of the molten pig iron may be increased without increasing the length in the longer side direction of the horizontal section at the height of the lower tuyeres, namely the length in the longer side direction of the furnace. As a result, advantages as described below can be obtained.

(1) The furnace may be easily arranged within a factory building.
(2) The thermal expansion of the furnace and the refractories can be easily absorbed.
(3) The uniformity of reactions in the longer side direction of the furnace having a rectangular horizontal section can be easily ensured.

To achieve the second object, a second invention provides a furnace structure of a smelting reduction apparatus for directly producing a molten metal by charging a metal raw material, a carbon material and a flux into the furnace, and blowing oxygen and/or oxygen-enriched gas into a slag through lower tuyeres provided in such a manner that the lower tuyeres penetrate the sides of the furnace in the horizontal direction toward the slag, characterized in that lowest tuyeres are provided in such a manner that the tuyeres are located in the side wall portions of the furnace below the lower tuyeres and not lower than the position corresponding to the interface between the slag and the molten metal within the furnace and directed at a downward angle of 0 to 45° from the horizontal direction, and through which an inert gas is blown.

In the furnace structure of the smelting reduction apparatus of the second invention, the lowest tuyeres are provided in the side wall portions of the furnace at sites below the lower tuyeres and not lower than the position corresponding to the interface between the slag and the molten metal within the furnace and directed at a downward angle of 0 to 45° from the horizontal direction, and an inert gas is blown therethrough. As a result, the slag portion directly above the interface therebetween is stirred without blowing a gas for stirring the metal through tuyeres below the metal bath surface, and the relative speed between the slag and the molten metal is increased, whereby the quantity of heat transfer from the slag to the molten metal is increased. Consequently, the temperature difference between the slag and the molten metal may be decreased. Advantages as described below can thus be obtained.

(1) The temperature difference between the slag and the molten pig iron is decreased, and the temperatures of the slag and the combustible gas vented from the furnace can be lowered in accordance with the decrease in the temperature difference. The unit requirements of the carbon material and oxygen are lowered in accordance with the heat quantity corresponding to the temperature decreases.
(2) The temperatures of the slag and the combustible gas vented from the furnace can be lowered, and when an area of the inner surface of the furnace facing the secondary combustion zone and the slag is lined with a water-cooled panel, the heat quantity extracted by the water-cooled panel is decreased. As a result, the unit requirements of the carbon material and oxygen are decreased in accordance with the heat quantity corresponding to the decrease in the extracted heat quantity.
(3) The temperature of the combustible gas vented from the furnace can be lowered, and when an area of the inner surface of the furnace facing the secondary combustion zone is lined with refractories, the wear rate of the refractories can be decreased. Consequently, the frequency of repairing and patching can be decreased.
(4) Since particles of the molten metal are not blown up into the slag, the molten metal is not reoxidized with oxygen or oxygen-enriched gas blown into the slag through the lower tuyeres. Accordingly, the reduction rate is improved, that is, the production rate is improved.
(5) Since particles of the molten metal are not blown up into the slag, the heat content and the heat conductivity of the slag decrease, and the furnace wall and the lower tuyeres contacted with the slag can be made water-cooled structures, whereby by they can be used semipermanently. As a result, the cost of the refractories and the tuyeres can be extremely reduced and the frequency of stopping operations to repair and exchange can be drastically decreased.

(6) Since the tuyeres below the metal bath surface are not required, the cost of the refractories and the tuyeres can be extremely reduced and the frequency of stopping operations to repair and exchange can be drastically decreased.

To achieve the third object, a third invention provides a furnace structure of a smelting reduction apparatus for directly producing a molten metal by charging a metal raw material, a carbon material and a flux into the furnace having a rectangular horizontal section, and blowing oxygen and/or oxygen-enriched gas into a slag through lower tuyeres provided in such a manner that the lower tuyeres penetrate the longer sides of the furnace in the horizontal direction toward the slag, characterized in that the lower tuyeres are directed in the lateral direction from the direction vertical to the longer sides of the furnace at an angle of 15 to 45° toward the direction opposite to that to a raw material charging inlet.

In the furnace structure of the smelting reduction apparatus according to the third invention, the lower tuyeres are directed in the lateral direction from the direction vertical to the longer sides of the furnace at an angle of 15 to 45° toward the direction opposite to that to a raw material charging inlet. As a result, advantages as described below are obtained.

(1) The concentrations of the iron raw material and the carbon material in the slag can be made homogeneous in the longer side direction of the furnace having a rectangular horizontal section by allowing the slag portion above the lower tuyeres to flow in the longer side direction thereof in the direction opposite to the raw material charging inlet. Consequently, the production amount may be increased, that is, the number of the raw material charging inlet may be made single even when the longer side of the furnace having a rectangular horizontal section is extended. The furnace may thus be operated with a single raw material charging apparatus, and the apparatus cost can be reduced.

(2) The space between the raw material charging inlet and the gas outlet may be extended by using a single raw material charging inlet. As a result, an increase in the amounts of the metal raw material and the carbon material which enter the flow of the combustible gas generated in the furnace and are directly scattered and carried to the gas outlet can be prevented even when the particle sizes of the materials are small.

Furthermore, the slag portion below the lower tuyeres flows in the direction opposite to that of the slag portion above the lower tuyeres, namely in the direction of the raw material charging inlet. As a result, the slag portion directly above the interface between the molten pig iron and the slag is allowed to flow, and the relative speed between the slag and the molten pig iron is increased. The quantity of heat transfer from the slag to the molten pig iron may, therefore, be increased, and consequently the temperature difference between the slag and the molten metal may be decreased. Advantages as described below can thus be obtained.

(3) The temperature difference between the slag and the molten pig iron is decreased, and the temperatures of the slag and the combustible gas vented from the furnace can be lowered in accordance with the decrease in the temperature difference. The unit requirements of the carbon material and oxygen are lowered in accordance with the heat quantity corresponding to the temperature decreases.

(4) The temperatures of the slag and the combustible gas vented from the furnace can be lowered, and when an area of the inner surface of the furnace facing the secondary combustion zone and the slag is lined with a water-cooled panel, the heat quantity extracted by the water-cooled panel is decreased. As a result, the unit requirements of the carbon material and oxygen are decreased in accordance with the heat quantity corresponding to the decrease in the extracted heat quantity.

(5) The temperature of the combustible gas vented from the furnace can be lowered, and when an area of the inner surface of the furnace facing the secondary combustion zone is lined with refractories, the wear rate of the refractories can be decreased. Consequently, the frequency of repairing and patching can be decreased.

(6) Since particles of the molten metal are not blown up into the slag, the molten metal is not reoxidized with oxygen or oxygen-enriched gas blown into the slag through the lower tuyeres. Accordingly, the reduction rate is improved, that is, the production rate is improved.

(7) Since particles of the molten metal are not blown up into the slag, the heat content and the heat conductivity of the slag decrease, and the furnace wall and the lower tuyeres contacted with the slag can be made water-cooled structures, whereby by they can be used semipermanently. As a result, the cost of the refractories and the tuyeres can be extremely reduced and the frequency of stopping operations to repair and exchange can be drastically decreased.

(8) Since the tuyeres below the metal bath surface are not required, the cost of the refractories and the tuyeres can be extremely reduced and the frequency of stopping operations to repair and exchange can be drastically decreased.

To achieve the fourth object, a first aspect of a fourth invention provides a furnace structure of a smelting reduction apparatus for directly producing a molten metal by charging a metal raw material, a carbon material and a flux into the furnace having a rectangular horizontal section, and blowing oxygen and/or oxygen-enriched gas into a slag through lower tuyeres provided in such a manner that the lower tuyeres penetrate the longer sides of the furnace in the horizontal direction toward the slag, characterized in that the spacing $L_6$ between two pairs of the lower tuyeres in the central portion in the longer side direction of the rectangular furnace is set as follows:

$$2 \times H \times \tan \theta < L_6 \leq 6 \times H \times \tan \theta$$

where H is the height from the lower tuyeres to the slag bath surface and $2\theta$ is a spread angle of the gas blown into the slag therethrough, and that the distance $L_2$ from the lower tuyeres situated most closely to the shorter side of the rectangular furnace to the shorter side thereof is set as follows: $L_2 \leq H \times \tan \theta$.

Alternatively, in a second aspect of a fourth invention, the spacing $L_1$ between adjacent lower tuyeres is set as follows:

$$2 \times H \times \tan \theta < L_1 \leq 4 \times H \times \tan \theta$$

and the distance $L_2$ from the lower tuyeres situated most closely to the shorter side of the rectangular furnace to the shorter side thereof is set as follows: $L_2 \leq H \times \tan \theta$.

Alternatively, in a third aspect of a fourth invention, the length $L_5$ in the shorter side direction of the horizontal section of the furnace at the height of the lower tuyeres is set as follows:

$$2 \times L_4 < L_5 \leq 4 \times L_4$$

where $L_4$ is a coverage in the horizontal direction of the gas blown into the slag through the lower tuyeres, and the longer sides of the rectangular furnace is formed with vertical walls.

Alternatively, in a fourth aspect of a fourth invention, nozzles for blowing a gas in the horizontal direction toward the slag are provided on the longer sides and/or shorter sides of the rectangular furnace at positions above the lower tuyeres and up to the top surface of the slag within the furnace.

Alternatively, in a fifth aspect of a fourth invention, the corners of the furnace having a rectangular norizontal section are chamfered or rounded.

According to the first aspect of the fourth invention, the spacing $L_6$ between the two pairs of the lower tuyeres in the central portion in the longer side direction of the rectangular furnace is set as follows:

$$2 \times H \times \tan \theta < L_6 < 6 \times H \times \tan \theta$$

where H is the height of the slag bath surface from the lower tuyeres, and $2\theta$ is a spread angle of the gas blown through the lower tuyeres, and the distance $L_2$ from the lower tuyeres which are nearest to the shorter side of the rectangular furnace to the shorter side thereof is set as follows: $L_2 \leq H \times \tan \theta$. As a result, ascending flows of the slag are generated near the shorter sides of the furnace, and a descending flow of the slag is generated in the central portion in the longer side direction of the furnace. In the bath surface portion of the slag, flows of the slag in the horizontal direction from the shorter sides of the furnace toward the central portion in the longer side direction of the furnace are generated. As a result, the carbon material having a low specific gravity, compared with the slag, is pushed to the central direction in the longer side direction of the furnace by the above-mentioned flow in the horizontal direction, and floats near the central portion in the longer side direction of the furnace in the bath surface portion of the slag. Since the carbon material floating near the central portion suffers no friction resistance from the furnace side walls, it enters the descending flow of the slag near the central portion relatively easily, and is included in the slag to increase the amount of the carbon material suspended in the slag.

According to the second aspect of the fourth invention, the spacing $L_1$ of the lower tuyeres is set as follows: $2 \times H \times \tan \theta < L_1 \leq 4 \times H \times \tan \theta$, and the distance $L_2$ from the lower tuyeres to the shorter side of the furnace is set as follows: $L_2 \leq x \tan \theta$. As a As a result, an ascending flow of the slag is generated near the portion directly above each lower tuyere and near each shorter side of the furnace, and a descending flow of the slag is generated in the central portion between each pair of adjacent lower tuyeres. In the bath surface portion of the slag, a flow of the slag is generated in the horizontal direction from near the portion directly above each lower tuyere toward near the central portion between the above-mentioned tuyere and its adjacent lower tuyere. Consequently, the carbon material having a low specific gravity, compared with the slag, is pushed to near the central portion between the adjacent two lower tuyeres by the flow of the slag in the horizontal direction as mentioned above, and floats near the central portion in the bath surface portion of the slag. Since the floating carbon material suffers no friction resistance at the furnace side walls, it enters the descending flow of the slag relatively easily, and is included in the slag to increase the amount of the suspended carbon material.

In the third aspect of the fourth invention, the length $L_5$ in the shorter side direction of the horizontal section of the furnace at the height of the lower tuyeres is set as follows:

$$2 \times L_4 < L_5 \leq 4 \times L_4$$

where $L_4$ is a coverage in the horizontal direction of the gas blown into the slag through the lower tuyeres. As a result, ascending flows of the slag near the longer sides of the furnace are generated, and descending flows of the slag are generated in the central portion in the longer side direction of the furnace. In the bath surface portion of the slag, flows in the horizontal direction from the longer sides of the furnace to the central portion in the shorter side direction of the furnace are generated. As a result, the carbon material having a low specific gravity, compared with the slag, is pushed to the central direction in the shorter side direction of the furnace by the above-mentioned flow in the horizontal direction, and floats near the central portion in the shorter side direction of the furnace in the bath surface portion of the slag. Since the carbon material floating near the central portion suffers no friction resistance at the furnace side walls, it enters the descending flow of the slag near the central portion in the shorter side direction of the furnace relatively easily, and is included in the slag to increase the amount of the carbon material suspended in the slag.

According to the fourth aspect of the fourth invention, nozzles for blowing a gas in the horizontal direction toward the slag are provided in the longer sides and/or shorter sides of the rectangular furnace up to the height corresponding to the top surface of the slag within the furnace. As a result, the carbon material having a low specific gravity, compared with the slag, is pushed toward the center of the rectangular furnace from the longer sides and/or shorter sides thereof. Since the carbon material suffers no friction resistance of the furnace side walls, it gets on the descending flow of the slag relatively easily, and is included in the slag to increase the amount of the suspended carbon in the slag.

According to the fifth aspect of the fourth invention, the corners of the furnace having a rectangular horizontal section are chamfered or rounded. As a result, the area of the furnace corner portions in the bath surface portion of the slag where a particularly large amount of the carbon material tends to be retained is decreased. Accordingly, the amount of the carbon material floating in the bath surface portion of the slag is decreased, and the amount of the carbon material suspended in the slag is relatively increased.

Advantages as mentioned below can be obtained from what is described above.

(1) The carbon material is prevented from floating and being retained near the furnace sides in the slag bath surface portion, namely near the longer sides and the shorter sides of the furnace having a rectangular horizontal section, and the amount of the carbon material included and suspended in the molten slag is increased, whereby the reduction reaction of the metal material, namely the metal oxide with the carbon material in the molten slag may be promoted.
(2) The amount of the carbon material suspended in the central portion of the slag in the longer side direction is increased, and the concentration of the suspended carbon material in the slag is made homogeneous, whereby the reduction reaction of the metal material, namely the metal oxide and the carbon material in the molten slag may be made uniform.
(3) Alternatively, the concentration of the suspended carbon material in the central portion in the longer side direction of the furnace is made higher than that near the shorter sides of the furnace, whereby the reduction rate of the carbon material in the central portion, which is not cooled by the water-cooled panel, in the longer side direction of the furnace, may be made higher than that in the portions near the shorter sides 17 of the furnace which are cooled by the water-cooled panel.

To achieve the fifth object, a first aspect of a fifth invention provides a method for operating a smelting reduction apparatus for directly producing a molten metal by charging a metal raw material, a carbon material and a flux into the furnace lined with a water-cooled panel, blowing oxygen and/or oxygen-enriched gas into a slag through lower tuyeres provided in such a manner that the lower tuyeres penetrate the sides of the furnace in the horizontal direction toward the slag, and blowing simultaneously oxygen and/or oxygen-enriched gas through upper tuyeres and/or upper lances provided in such a manner that the upper tuyeres penetrate the furnace, characterized by comprising blowing oxygen and/or oxygen-enriched gas into the slag within the furnace through the upper tuyeres and/or tips of the upper lances which are arranged at sites above the lower tuyeres and up to the height corresponding to the top surface of the slag within the furnace.

A second aspect of a fifth invention provides a furnace structure of a smelting reduction apparatus for directly producing a molten metal by charging a metal raw material, a carbon material and a flux into the furnace lined with a water-cooled panel, blowing oxygen and/or oxygen-enriched gas into a slag through lower tuyeres provided in such a manner that the lower tuyeres penetrate the sides of the furnace in the horizontal direction toward the slag, and blowing simultaneously oxygen and/or oxygen-enriched gas through upper tuyeres and/or upper lances provided in such a manner that they penetrate the furnace, characterized in that the height $H_3$ from the lower tuyeres to the upper tuyeres and/or tips of the upper lances is set as follows:

$$H_1 < H_3 < 3 \times H_1$$

where $H_1$ is the height from the lower tuyeres to a cinder notch.

In the fifth invention, the tips of the upper tuyeres/and or upper lances are provided above the lower tuyeres and at sites up to the height of the top surface of the slag within the furnace, and as a result CO gas generated in the foaming slag and the hydrogen component in the carbon material are secondarily combusted in the slag with oxygen blown into the slag through the upper tuyeres. Heat transfer from the upper space to the slag, therefore, becomes unnecessary. Consequently, the temperature difference between the slag and the combustible gas may be decreased without blowing a gas for stirring the metal through tuyeres below the surface of the metal bath. Advantages as described below may thus be obtained.

(1) The temperature difference between the slag and the combustible gas decreases, and the temperature of the combustible gas vented from the furnace can be lowered in accordance with the decrease. The unit requirements of the carbon material and oxygen can be decreased in accordance with the decrease in heat quantity corresponding to the temperature decrease.

(2) The temperature of the combustible gas vented from the furnace can be lowered, and the quantity of heat extracted by the area of the water-cooled panel facing the upper space of the furnace is lowered. The unit requirements of the carbon material and oxygen are decreased in accordance with the heat quantity.

(3) Since reactions of the secondary combustion are effected in the slag, the upper space may be reduced. As a result, the quantity of heat extracted by the area of the water-cooled panel facing the upper space of the furnace is lowered, and the unit requirements of the carbon material and oxygen are decreased in accordance with the heat quantity. Moreover, the furnace height may be decreased, and the apparatus cost may be reduced.

(4) Since particles of the molten metal are not blown into the slag, the molten metal is not reoxidized with oxygen or oxygen-enriched gas blown into the slag through the lower tuyeres, whereby the reduction rate, namely the production rate, is improved.

(5) Since particles of the molten metal are not blown into the slag, the heat content and the heat conductivity of the slag are small, and the furnace wall and the lower tuyeres contacted with the slag can be made water-cooled structures whereby they can be used semipermanently. As a result, the cost of the refractories and the tuyeres can be greatly reduced, and the frequency of stopping operations for repairing and exchanging is drastically decreased.

(6) Since tuyeres below the surface of the metal bath are not required, the cost of the refractories and the tuyeres is greatly reduced, and the frequency of stopping operations for repairing and exchanging is drastically decreased.

To achieve the sixth object, a first aspect of a sixth invention provides a method for operating a smelting reduction apparatus for directly producing a molten metal by charging a metal raw material, a carbon material and a flux into the furnace, characterized by comprising blowing oxygen and/or oxygen-enriched gas into a slag through lower tuyeres provided in such a manner that the tuyeres penetrate the respective two longer sides of the furnace having a rectangular horizontal section toward the slag, and blowing the carbon material and/or metal raw material into the slag within the furnace through lances provided in such a manner that the tips of the lances are arranged at sites above the lower tuyeres and up to the height corresponding to the top surface of the slag within the furnace.

The method for operating a smelting reduction apparatus according to the first aspect of the sixth invention preferably comprises screening the carbon material and/or metal raw material in advance, blowing the carbon material and/or metal raw material in powder form through the lances, and charging the carbon material and/or metal raw material in block form through a raw material charging inlet provided above the furnace.

A second aspect of a sixth invention provides a furnace structure of a smelting reduction apparatus for directly producing a molten metal by charging a metal raw material, a carbon material and a flux into the furnace, characterized in that lower tuyeres are provided in such a manner that the tuyeres penetrate the respective two longer sides of the furnace having a rectangular horizontal section toward the slag and lances provided in such a manner that the tips of the lances are arranged at sites above the lower tuyeres and up to the height corresponding to the top surface of the slag within the furnace, and the height $H_3$ from the lower tuyeres to the upper tuyeres and/or tips of the upper lances being set as follows:

$$H_1 < H_3 < 3 \times H_1$$

where $H_1$ is the height from the lower tuyeres to a cinder notch.

The furnace structure of a smelting reduction apparatus according to the second aspect of the sixth invention preferably has one raw material charging inlet provided at one end in the longer side direction on the top surface of the furnace, and lances for blowing the carbon material and/or metal raw material in powder form provided on the other end in the longer side direction.

The furnace structure of a smelting reduction apparatus according to the second aspect of the sixth invention preferably has two raw material charging inlets provided at both ends in the longer side direction on the top surface of the furnace, and lances for blowing the carbon material and/or metal raw material in powder form provided at the center in the longer side direction.

According to the method for operating the smelting reduction apparatus and the furnace structure according to the sixth invention, advantages as described below are obtained.

(1) Lances for blowing a carbon material and/or iron raw material in powder form are provided and the tips of the lances are arranged at sites above the lower tuyeres and up to the height corresponding to the top surface of the slag within the furnace so that the carbon material and/or iron raw material are blown into the slag. As a result, the carbon material and/or iron raw material in powder form is melted and reacted in the slag and does not float on the top surface of the slag, and the proportion thereof carried away by the ascending current of a combustible gas generated from the slag is significantly decreased. Consequently, the yield of the carbon material and/or iron raw material is significantly improved.

(2) Only a single raw material charging inlet is provided at one end in the longer side direction on the top surface of the furnace, and lances for blowing the carbon material and/or iron raw material in powder form are provided on the other end in the longer side direction on the top surface of the furnace. As a result, the concentrations of the iron raw material and the carbon material in the slag are made homogeneous in the longer side direction, and the number of the raw material charging inlets may be made one even when the production amount is increased, that is, the longer sides of the furnace having a rectangular horizontal section are extended. Accordingly, the number of the raw material charging apparatus becomes one, and the installation cost is reduced.

(3) Since only a single raw material charging inlet is provided, the distance between the raw material charging inlet and the gas outlet may be increased. As a result, even when the particle sizes of the metal raw material and the carbon material are small , an increase in the amounts of the metal raw material and the carbon material which get on the flow of the combustible gas generated from the furnace and are directly scattered can be prevented.

(4) Oxygen and/or oxygen-enriched gas is blown into the slag through the lower tuyeres which are provided in such a manner that the tuyeres penetrate the side walls of the furnace in the horizontal direction toward the slag, without blowing oxygen-containing gas toward the molten pig iron through the bottom tuyeres, and the slag alone is stirred. As a result, particles of the molten pig iron are neither blown into or above the slag, nor reoxidized with oxygen or oxygen-enriched gas blown through the upper tuyeres. Accordingly, the reduction rate, namely the production rate is improved, and the amount of a metal component scattered together with the combustible gas is decreased.

(5) Since particles of the molten metal are not suspended in the slag, the heat content and the heat conductivity of the slag are low, and the furnace wall can be made water-cooled structures. Moreover, the furnace has no tuyeres below the surface of the metal bath. Accordingly, the unit requirement of the refractories and the frequency of repairing are significantly decreased.

BRIEF DESCRIPTION OF THE DRAWINGS

Fig. 1 is a transverse sectional view showing one embodiment of a furnace structure of a smelting reduction apparatus according to the first invention.

Fig. 2 is a vertical sectional view of the furnace structure in Fig. 1.

Fig. 3 is a transverse sectional view showing a furnace structure of prior art proposed in Japanese Patent Kokai Publication No. 1-502276.

Fig. 4 is a transverse sectional view of a furnace structure prepared by extending the length in the shorter side direction of the furnace structure in Fig. 3.

Fig. 5 is a transverse sectional view showing one embodiment of a furnace structure of a smelting reduction apparatus according to the second invention.

Fig. 6 is a vertical sectional view of the furnace structure in Fig. 5.

Fig. 7 is a transverse sectional view showing another embodiment of a furnace structure of a smelting reduction apparatus according to the second invention.

Fig. 8 is an expanded sectional view of a tuyere portion which is prepared by integrating the lower tuyere and the lowest tuyere in Fig. 7.

Fig. 9 is a transverse sectional view showing the furnace structure of prior art proposed in Japanese Patent Kokai Publication No. 1-502276, from another standpoint.

Fig. 10 is a vertical sectional view showing one embodiment of a furnace structure of a smelting reduction apparatus according to the third invention.

Fig. 11 is a sectional view along line A-A in Fig. 10.

Fig. 12 is a sectional view along line B-B in Fig. 10.

Fig. 13 is a vertical sectional view showing the furnace structure of prior art proposed in Japanese Patent Kokai Publication No. 1-502276, from another standpoint.

Fig. 14 is a sectional view along line A-A in Fig. 13.

Fig. 15 is a sectional view along line B-B in Fig. 13.

Fig. 16 is a vertical sectional view showing one embodiment of a furnace structure of a smelting reduction apparatus according to the first aspect of the fourth invention.

Fig. 17 is a sectional view along line A-A in Fig. 16.

Fig. 18 is a sectional view along line B-B in Fig. 16.

Fig. 19 is a vertical sectional view showing one embodiment of a furnace structure of a smelting reduction apparatus according to the second aspect of the fourth invention.

Fig. 20 is a sectional view along line A-A in Fig. 19.

Fig. 21 is a sectional view along line B-B in Fig. 19.

Fig. 22 is a vertical sectional view showing one embodiment of a furnace structure of a smelting reduction apparatus according to the third aspect of the fourth invention.

Fig. 23 is a sectional view along line A-A in Fig. 22.

Fig. 24 is a sectional view along line B-B in Fig. 22.

Fig. 25 is a vertical sectional view showing one embodiment of a furnace structure of a smelting reduction apparatus according to the fourth and the fifth aspects of the fourth invention.

Fig. 26 is a sectional view along line A-A in Fig. 25.

Fig. 27 is a sectional view along line B-B in Fig. 25.

Fig. 28 is a vertical sectional view showing the furnace structure of prior art proposed in Japanese Patent Kokai Publication No. 1-502276, from another standpoint.

Fig. 29 is a sectional view along line A-A in Fig. 28.

Fig. 30 is a sectional view along line B-B in Fig. 28.

Fig. 31 is a vertical sectional view showing one embodiment of a furnace structure of a smelting reduction apparatus according to the fifth invention.

Fig. 32 is a sectional view along line A-A in Fig. 31.

Fig. 33 is a vertical sectional view showing another embodiment of a furnace structure of a smelting reduction apparatus according to the fifth invention.

Fig. 34 is a sectional view along line A-A in Fig. 33.

Fig. 35 is a vertical sectional view showing still another embodiment of a furnace structure of a smelting reduction apparatus according to the fifth invention.

Fig. 36 is a sectional view along line A-A in Fig. 35.

Fig. 37 is a vertical sectional view showing the furnace structure of prior art proposed in Japanese Patent Kokai Publication No. 1-502276, from another standpoint.

Fig. 38 is a sectional view along line A-A in Fig. 37.

Fig. 39 is a vertical sectional view showing one embodiment of a furnace structure of a smelting reduction apparatus according to the sixth invention.

Fig. 40 is a sectional view along line A-A in Fig. 39.

Fig. 41 is a sectional view along line B-B in Fig. 39.

Fig. 42 is a vertical sectional view showing another embodiment of a furnace structure of a smelting reduction apparatus according to the sixth invention.

Fig. 43 iS a sectional view along line A-A in Fig. 42.

Fig. 44 is a sectional view along line B-B in Fig. 42.

DETAILED DESCRIPTION OF THE PREFERRED EMBODIMENT

Example 1

One embodiment of the first invention will be explained.

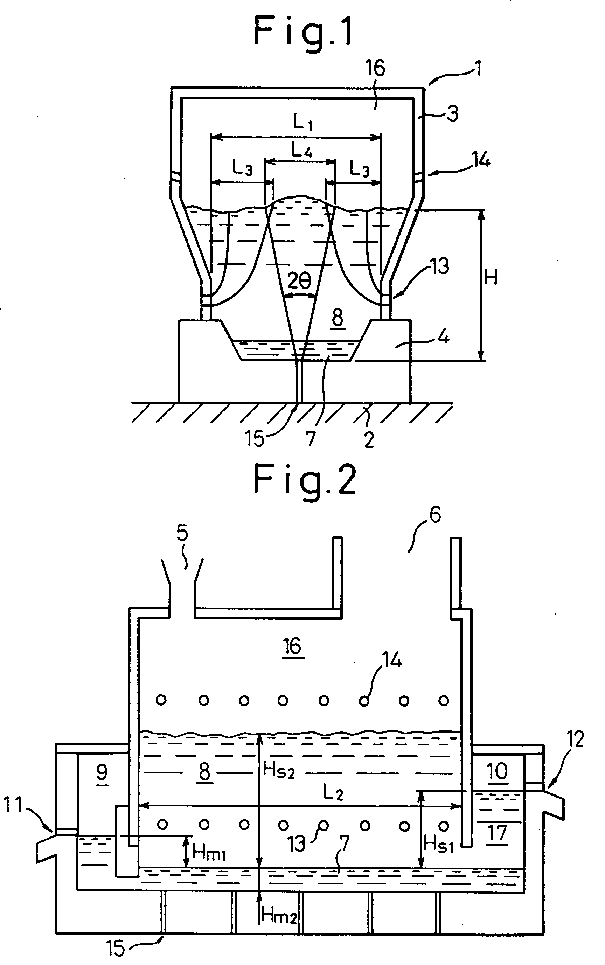

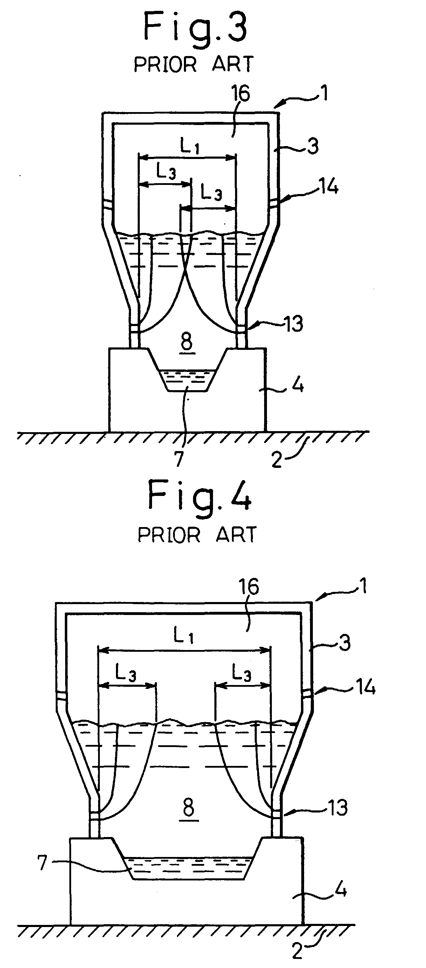

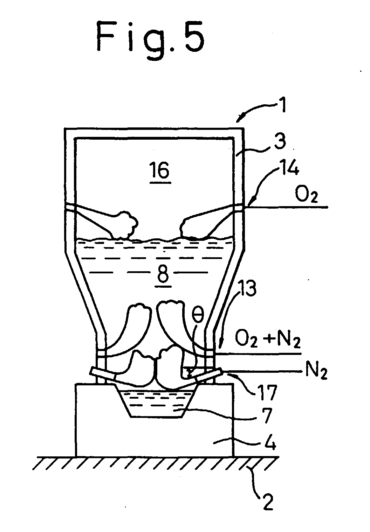

Fig. 1 is a transverse sectional view showing a smelting reduction apparatus according to the first invention, and Fig. 2 is a vertical sectional view of the furnace stricture in Fig. 1. Fig. 3 is a transverse sectional view showing a furnace structure of a smelting reduction apparatus of prior art proposed in Japanese Patent Kokai Publication No. 1-502276. Fig. 4 is a transverse sectional view of a furnace structure prepared by extending the length in the shorter side direction of the horizontal section of the furnace at the height of the lower tuyeres in the smelting reduction apparatus of prior art in Fig. 3.

The furnace structure and the reactions within the furnace will be explained below repeating the explanation having been made above regarding the prior art.

A furnace 1 is fixed to a base 2, and the inner wall of the furnace is lined with a water-cooled panel 3 and refractories 4. The top of the furnace is provided with a raw material charging inlet 5 for charging an iron raw material, a carbon material and a flux and with a gas outlet 6 for a combustible gas generated from the furnace.

A molten pig iron 7 accumulates at the bottom of the furnace 1, and a foaming slag 8 having a specific gravity lower than the molten pig iron 7 accumulates thereon. The molten peg iron 7 and the slag are continuously discharged from a tap hole 11 through a molten pig iron pool 9 and from a cinder notch 12 through a slag pool 10, respectively.

Iron oxides (FeO and $Fe_2O_3$) in the iron raw material charged through the raw material charging inlet 5 are reduced with a carbon component in the carbon material charged through the same raw material charging inlet 5 into a foaming slag 8 by reactions of the following formulas:

$$FeO + C \rightarrow Fe + CO \text{ (endothermic reaction)} \tag{1}$$

$$Fe_2O_3 + 3C \rightarrow 2Fe + 3CO \text{ (endothermic reaction)} \tag{2}$$

Since the reduction reactions of the formulas (1), (2) are caused in the foaming slag 8 in the smelting reduction process, it has been widely known that the reduction rate, namely the production rate of the molten pig iron is approximately proportional to the slag volume.

Further, part of the carbon component in the carbon material charged through the raw material charging inlet 5 reacts with oxygen blown into the foaming slag 8 through lower tuyeres 13 which are provided in such a manner that the tuyeres penetrate the furnace 1 toward the foaming slag 8, by a reaction of the formula

$$C + 1/2O_2 \rightarrow CO \text{ (exothermic reaction)} \tag{3}$$

The energy efficiency, namely the unit requirement of the carbon material of the smelting reduction furnace is determined by the total amount of the carbon component necessary for the reactions of the formulas (1) to (3).

Furthermore, CO gas generated in the foaming slag 8 by the reactions of the formulas (1) to (3) and the hydrogen component in the carbon material are oxidized with oxygen blown into a secondary combustion zone 16 through upper tuyeres 14 provided in such a manner that the tuyeres penetrate the furnace 1 toward the secondary combustion zone 16, by reactions of the following formulas:

$$CO + 1/2O_2 \rightarrow CO_2 \text{ (exothermic reaction)} \tag{4}$$

$$H_2 + 1/2O_2 \rightarrow H_2O \text{ (exothermic reaction)} \tag{5}$$

The reactions of the formulas (4) and (5) are termed in-furnace secondary combustion. It has been widely known that the degree of the secondary combustion is expressed in terms of an in-furnace secondary combustion rate defined by the formula (6) described below, and that the secondary combustion rate is increased by increasing the flow rate of oxygen blown into the secondary combustion zone 16 through the upper tuyeres 14.

$$\text{In-furnace secondary combustion rate} = (CO_2 \% + H_2O \%) / (CO_2 \% + CO \% + H_2O \% + H_2 \%) \tag{6}$$

wherein $CO_2$ %, CO %, $H_2O$ % and $H_2$ % represent respective volume fractions in the combustible gas in the gas outlet 6.

When the in-furnace secondary combustion rate is increased, part of the heat of reaction of the reactions of the formulas (4) and (5) in the secondary combustion zone 16 is transferred to the foaming slag 8, and the unit requirement of the carbon material is decreased by decreasing the carbon component necessary for the exothermic reaction of the formula (3) in the slag.

In order to increase the quantity of heat transfer from the secondary combustion zone to the foaming slag 8, the foaming slag 8 must be sufficiently stirred in the upward and downward directions as described above. In a furnace structure of the smelting reduction apparatus of prior art proposed in Japanese Patent Kokai Publication No. 1-502276, pure oxygen and/or oxygen enriched gas is blown into the foaming slag 8 through lower tuyeres 13 which are provided in such a manner that they penetrate the two longer sides of the rectangular furnace in the horizontal direction toward the foaming slag 8 as shown in Fig. 3. The length $L_1$ in the shorter side direction of the horizontal section of the furnace at the height of the lower tuyeres is, therefore, set as follows:

$$L_1 \leq 2 \times L_3$$

wherein $L_3$ is the coverage of the blown gas in the horizontal direction.

When $L_1$ is set as follows:

$L_1 > 2 \times L_3$, pure oxygen and/or oxygen-enriched gas blown into the foaming slag 8 through the lower tuyeres 13 does not reach the central portion in the shorter side direction of the horizontal section of the furnace at the height of the lower tuyeres. As a result, the problem that the foaming slag 8 near the central portion in the shorter side direction is not stirred sufficiently arises.

On the other hand, when the gas is blown through bottom tuyeres 15 provided in the vertical direction toward the molten pig iron 7 and the foaming slag 8, it has been widely known that the gas has a constant spread angle $2\theta$ (about 20°) (Iron and Steel, **61**, No. 6 (1981), etc.) regardless of the magnitude of the gas flow rate.

Accordingly, when the total height of the molten pig iron 7 and the slag 8 is defined as H, the spread width $L_4$ of the gas blown through the bottom tuyeres 15, on the top surface of the slag 8 is expressed as follows: $L_4 = 2H \times \tan\theta$. The slag in the range of the gas spread width $L_4$ is sufficiently stirred.

In the furnace structure of the smelting reduction apparatus according to the present invention as shown in Fig. 1, the bottom tuyeres are provided near the central portion in the shorter side direction at the furnace bottom, and an inert gas is blown into the molten pig iron through the bottom tuyeres. As a result, the foaming slag 8 near the central portion in the shorter side direction of the horizontal section at the height of the lower tuyeres as mentioned above is sufficiently stirred even when $L_1$ mentioned above is set as follows: $2 \times L_3 < L_1 < 2 \times (L_3 + H \times \tan\theta)$.

Table 1 below shows an instance of the furnace sizes in the smelting reduction apparatus according to the prior art and an embodiment thereof according to the present invention when the necessary horizontal sectional area S at the level of the lower tuyeres, the coverage $L_3$ of the gas blown in the horizontal direction through the lower tuyeres 13 and the height H of the molten pig iron 7 and the slag 8 are set as follows: $S = 50 \ m^2$, $L_3 = 1.3 \ m$ and $H = 5 \ m$.

Table 1

| | Prior art | Present invention |
|---|---|---|
| Necessary horizontal sectional area at height of lower tuyeres: $S = L_1 \times L_2$ | $50m^2$ | $50m^2$ |
| Coverage of gas in horizontal direction blown through lower tuyeres 13: $L_3$ | 1.3 m | 1.3 m |
| Spread width of gas blown through bottom tuyeres 15, on top surface of slag 8: $L_4 = 2R \times \tan\theta$ | | 1.7m |
| Length in shorter side direction of horizontal Section at height of lower tuyeres: $L_1$ | 2.5 m | 4.2 m |
| Length in longer side direction of horizontal section at height of lower tuyeres: $L_2$ | 20 m | 12 m |

Further, in an apparatus for directly producing molten iron or molten pig iron by blowing oxygen and/or oxygen-enriched gas into the slag through the lower tuyeres 13 which are provided in such a manner that they penetrate the two longer sides of the rectangular furnace 1 in the horizontal direction toward the slag 8, oxygen necessary for the exothermic reaction of the formula (3) is exclusively blown through the lower tuyeres 13. The gas blown through the bottom tuyeres 15 is, therefore, required only to contribute to the agitation of the slag 8 and the molten pig iron 7, and is not required to contain oxygen.

On the other hand, when the gas blown into the molten pig iron through the bottom tuyeres 15 is allowed to contain oxygen, the metal iron component in the molten pig iron may be reoxidized. Accordingly, an inert gas such as nitrogen or argon is blown therethrough.

In the tapping and slag discharge system based on the siphon principle in the present example as shown in Fig. 2, the relationships among the height $H_{m1}$ of the tapping hole 11 from the top surface of the molten pig iron 7 within the furnace, the height $H_{s1}$ of the cinder notch 12 from the top surface of the molten pig iron 7 therewithin and the height $H_{s2}$ of the foaming slag 8 therewithin from the top surface of the molten pig iron 7 therewithin are expressed by the following formulas:

$$H_{s1} = H_{m1} \times Y_m / Y_{s1} \qquad (7)$$

$$H_{s2} = H_{m1} \times Y_m / Y_{s2} \qquad (8)$$

wherein $Y_m$ is the specific gravity of the molten pig iron 7, $Y_{s1}$ is the specific gravity of the repressed slag 17 in a slag pool 10, and $Y_{s2}$ is the specific gravity of the foaming slag 8 therewithin.

Furthermore, the relationship among the total height H of the molten pig iron 7 and the slag 8 within the furnace, the height $H_{m2}$ of the molten pig iron 7 therewithin and the height $H_{s2}$ of the foaming slag 8 therewithin from the top surface of the molten pig iron 7 therewithin is expressed by the following formula:

$$H = H_{m2} + H_{s2} \tag{9}$$

Accordingly, the total height H of the molten pig iron 7 and the foaming slag 8 within the furnace is held constant when the height $H_{m1} + H_{m2}$ of the tapping hole 11 from the furnace bottom and the height $H_{s1} + H_{m2}$ of the cinder notch 12 therefrom are not changed.

Since the bottom tuyeres are provided near the central portion in the shorter side direction of the furnace bottom and an inert gas is blown into the molten pig iron therethrough in the furnace structure of the smelting reduction apparatus of the present invention, the length in the shorter side direction of the horizontal section at the height of the lower tuyeres, namely the length in the shorter side direction of the furnace can be increased, and the production amount of the molten pig iron may be increased without increasing the length in the longer side direction of the horizontal section at the height of the lower tuyeres, namely the length in the longer side direction of the furnace.

As a result, effects as described below can be achieved.

* The furnace may be easily arranged within a factory building.
* The thermal expansion of the furnace and the refractories can be easily absorbed.
* The uniformity of reactions in the longer side direction of the furnace having a rectangular horizontal section can be easily ensured.
* A reducing atmosphere is always maintained within the molten pig iron by blowing an inert gas thereinto through the bottom tuyeres, and the iron component is not reoxidized.

Example 2

Two embodiments of the second invention will be explained.

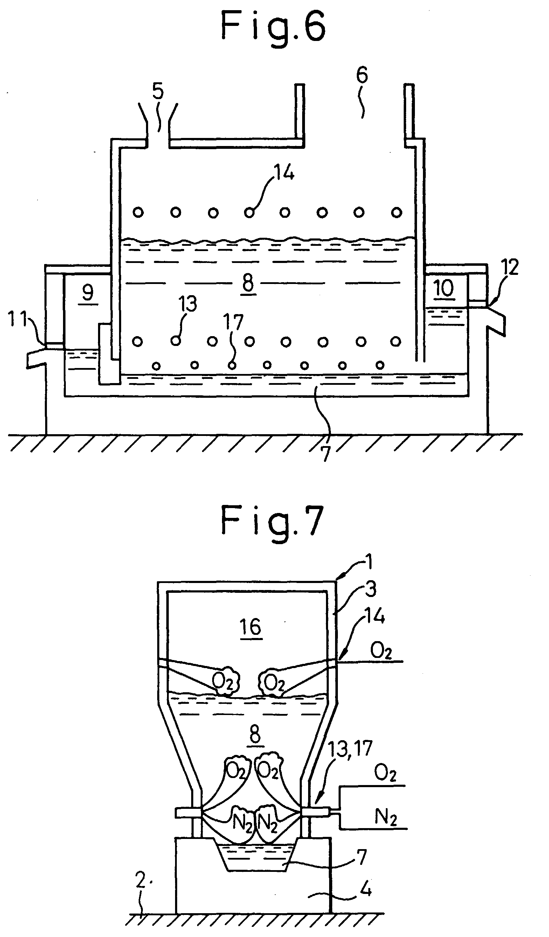

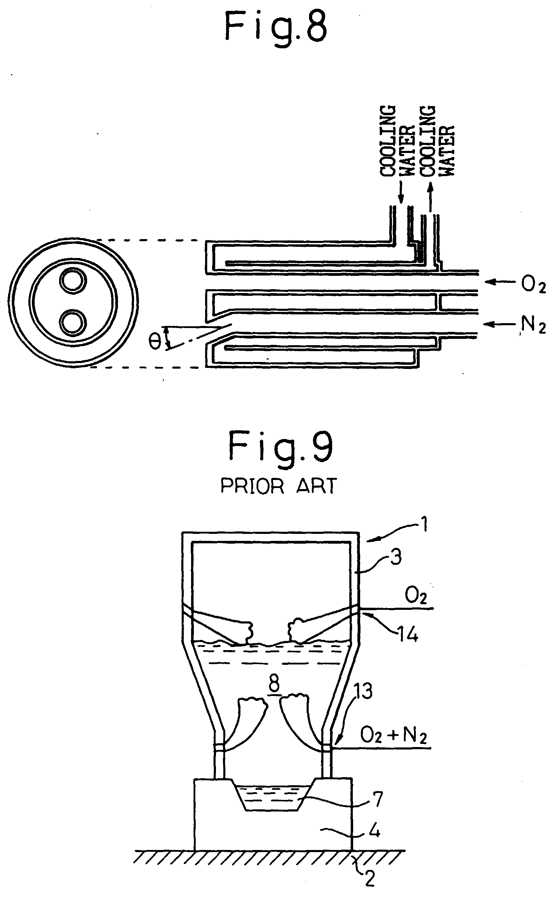

Fig. 5 is a transverse sectional view showing the furnace structure in one embodiment of the smelting reduction apparatus according to the present invention. Fig. 6 is a vertical sectional view of the furnace structure in Fig. 5. Fig. 7 is a transverse sectional view showing the furnace structure of another embodiment of the smelling reduction apparatus according to the present invention. Fig. 8 is an expanded sectional view of a tuyere portion in which the lower tuyere and the lowest tuyere in Fig. 7 are integrated. Fig. 9 is a transverse sectional view showing from another viewpoint the furnace structure of the smelting reduction apparatus of prior art proposed in Japanese Patent Kokai Publication No. 1-502276.

Firstly, an embodiment of the second invention will be explained using Figs. 5 and 6. The portions which correspond to those in Figs. 1 and 2 are followed by the same numerals as therein.

As described above, in order to increase the magnitude of a decrease in the carbon material unit requirement when the in-furnace secondary combustion rate is increased, increasing the quantity of heat transfer of the heat of reactions of the formulas (4) and (5) in the secondary combustion zone 16 to the slag 8, namely sufficiently stirring the slag in the upward and downward directions is effective. Since the quantity of heat transfer from the secondary combustion zone 16 to the slag 8 is also a function of a difference between the atmosphere temperature of the secondary combustion zone 16 and the temperature of the slag 8, making the temperature difference between the molten metal 7 and the slag 8 as small as possible and lowering the temperature of the slag 8 are also extremely effective.

Accordingly, in the smelting reduction apparatus according to the second invention shown in Fig. 5, lowest tuyeres 17 are provided in the furnace side wall portions below the lower tuyeres and up to the height corresponding to the interface between the slag and the molten metal within the furnace toward a downward direction at an angle of 0 to 45° from the horizontal direction, and an inert gas is blown through the lowest tuyeres 17. As a result, the slag portion directly above the interface therebetween is stirred, and the relative speed between the slag 8 and the molten metal 7 is increased, whereby the quantity of heat transfer from the slag 8 to the molten metal 7 is increased.

Results as described below have been confirmed by a model test with regard to the downward angle of the lowest tuyeres 17 conducted by the present inventors. When the angle is made at least 45°; recesses are formed on the portions of the molten metal 8 contacted with the inert gas blown through the lowest tuyeres 17, and particles of the molten metal 7 are blown up into the slag 8. When the vertical distance from the interface between the slag 8 and the molten metal 7 to the lowest tuyeres 17 is small, the slag portion directly above the interface therebetween is sufficiently stirred even when the downward angle is 0°. The downward angle of the lowest tuyeres 17 is, therefore, preferably from 0 to 45°.

In the prior art proposed in Japanese Patent Kokai Publication No. 1-502276 shown in Fig. 9, the lower tuyeres 13 are provided about 1,000 mm above the interface between the slag 8 and the molten metal 7 to avoid direct contact between oxygen and/or oxygen-enriched gas blown through the lower tuyeres 13 and the molten metal 7.

Furthermore, since it is preferred that the lowest tuyeres 17 may be used semipermanently by making them in a water-cooled structure, the lowest tuyeres 17 are preferably provided about 200 to 1,000 mm above the interface between the slag 8 and the molten metal 7 in view of the wave motion of the top surface of the molten metal 7.

Example 3

Another embodiment of the second invention will be explained by making reference to Figs. 7 and 8. The lower tuyeres 13 and the lowest tuyeres 17 are integrated in the present example. Tuyeres of an integrated and water-cooled structure are provided about 1,000 mm above the interface between the slag 8 and the molten metal 7 to avoid direct contact between oxygen blown through the lower tuyeres 13 and the molten metal 7, as described above.

Oxygen blown through the lower tuyeres 13, namely oxygen necessary for the reaction of the formula (3) is blown into the slag in the horizontal direction to avoid direct contact with the molten metal 7 as described above. On the other hand, the inert gas blown through the lowest tuyeres 17 is directed downwardly from the horizontal direction so that the slag portion directly above the interface between the slag 8 and the molten metal 7 is stirred.

Since the vertical distance from the interface between the slag 8 and the molten metal 7 to the lowest tuyeres 17 is as much as 1,000 mm, the downward angle of the lowest tuyeres 17 is preferably from 30 to 45°.

Table 2 shows an instance of the unit requirements of the carbon material and oxygen in the smelting reduction apparatus according to the prior art disclosed in Japanese Patent Kokai Publication No. 1-502276 and an example of those according to the second invention.

Table 2

|  | Prior art | Present invention |
|---|---|---|
| Molten metal temperature ($^0$C) | ca. 1400 | Ca. 1400 |
| Slag temperature (°C) | ca. 1500 | ca. 1400 |
| Temperature difference between molten metal and slag (°C) | ca. 100 | ca. 0 |
| Temperature of combustible gas from furnace (°C) | ca. 1700 | ca. 1600 |
| Extracted heat quantity index of water-cooled panel | 100 | 83 |
| Unit requirement index of carbon material | 100 | 93 |
| Unit requirement index of oxygen | 100 | 89 |

In the furnace structure of the smelting reduction apparatus of the second invention, lowest tuyeres are provided in the side wall portions of the furnace at sites below the lower tuyeres and not lower than the position corresponding to the interface between the slag and the molten metal within the furnace and directed at a downward angle of 0 to 45° from the horizontal direction, and an inert gas is blown therethrough. As a result, the slag portion directly above the interface therebetween is stirred, and the relative speed between the slag and the molten metal is increased, whereby the quantity of heat transfer from the slag to the molten metal is increased. Consequently, the temperature difference between the slag and the molten metal may be decreased.

Effects as described below can thus be achieved.

* The temperature difference between the slag and the molten pig iron is decreased, and the temperatures of the slag and the combustible gas vented from the furnace can be lowered in accordance with the decrease in the temperature difference. The unit requirements of the carbon material and oxygen are lowered in accordance with the heat quantity corresponding to the temperature decreases.
* The temperatures of the slag and the combustible gas vented from the furnace can be lowered, and when an area of the inner surface of the furnace facing the secondary combustion zone and the slag is lined with a water-cooled panel, the heat quantity extracted by the water-cooled panel is decreased. As a result, the unit requirements of the carbon material and oxygen are decreased in accordance with the heat quantity corresponding to the decrease in the extracted heat quantity.
* The temperature of the combustible gas vented from the furnace can be lowered, and when an area of the inner surface of the furnace facing the secondary combustion zone is lined with refractories, the wear rate of the refractories can be decreased. Consequently, the frequency of repairing and patching can be decreased.

* Since particles of the molten metal are not blown up into the slag, the molten metal is not reoxidised with oxygen or oxygen-enriched gas blown into the slag through the lower tuyeres. Accordingly, the reduction rate is improved, that is, the production rate is improved.

* Since particles of the molten metal are not blown up into the slag, the heat content and the heat conductivity of the slag decrease, and the furnace wall and the lower tuyeres contacted with the slag can be made water-cooled structures, whereby by they can be used semipermanently. As a result, the cost of the refractories and the tuyeres can be extremely reduced and the frequency of stopping operations to repair and exchange can be drastically decreased.

* Since the tuyeres below the metal bath surface are not required, the cost of the refractories and the tuyeres can be extremely reduced and the frequency of stopping operations to repair and exchange can be drastically decreased.

Example 4

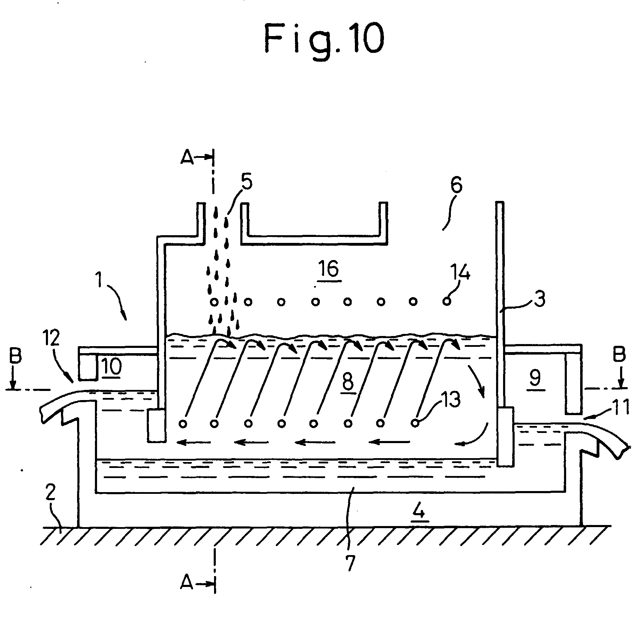

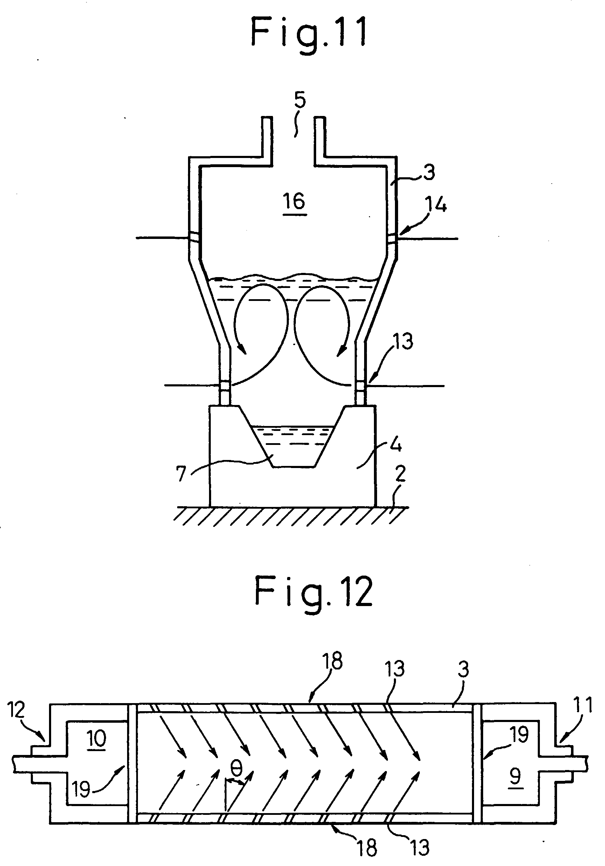

Fig. 10 is a vertical sectional view showing a furnace structure in one embodiment of the smelting reduction apparatus according to the third invention. Fig. 11 is a sectional view along line A-A in Fig. 10, and Fig. 12 is a sectional view along line B-B in Fig. 10.

In a smelting reduction apparatus for directly producing a molten pig iron 7 by charging a metal raw material, a carbon material and a flux into a furnace 1 having a rectangular horizontal section, and blowing oxygen and/or oxygen-enriched gas into a slag 8 through lower tuyeres 13 provided in such a manner that the lower tuyeres penetrate longer sides 18 of the furnace in the horizontal direction toward the slag, the lower tuyeres 13 are directed in the lateral direction from the direction vertical to the longer sides of the furnace at an angle $\theta$ of 15 to 45° toward the direction opposite to that of a raw material charging inlet 5.

As a result, the slag portion above the lower tuyeres 13 flows in the direction of the longer sides 18 of the furnace having a rectangular horizontal section and in the direction opposite to that of a raw material charging inlet 5.

Furthermore, the slag portion below the lower tuyeres 13 flows in the direction opposite to the flow direction of the slag portion above the lower tuyeres, namely in the direction to the raw material charging inlet 5. As a result, the portion of the slag 8 directly above the interface between the molten pig iron 7 and the slag 8 is stirred without blowing a gas to stir the metal through tuyeres below the metal bath surface, and the relative speed between the slag 8 and the molten pig iron 7 is increased, whereby the quantity of heat transfer from the slag 8 to the molten pig iron 7 is increased.

Results with regard to the lateral angle of the lower tuyeres 13 as described below have been confirmed by a model test having been conducted by the present inventors. When the lateral angle $\theta$ is made at least 45°, bubbles of oxygen and/or oxygen-enriched gas blown into the slag 8 through the lower tuyeres 13 do not reach the central portion in the direction of shorter sides 19 of the furnace 1, and the central portion therein is not sufficiently stirred. When the lateral angle $\theta$ is made up to 15°, the slag portion above the lower tuyeres 13 does not flow sufficiently in the direction of the longer sides 18 of the furnace and in the direction opposite to that to the raw material charging inlet 5. Accordingly, the lateral angle of the lower tuyeres 13 is preferably from 15 to 45°.

Table 3 shows an instance of the unit requirements of the carbon material and oxygen in the smelting reduction apparatus according to the prior art disclosed in Japanese Patent Kokai Publication No. 1-502276 and an example of those according to the third invention.

The test conditions are as follows:

| | |
|---|---|
| Furnace area (area of the horizontal section at the height of the lower tuyeres 13): | 20 m$^2$ |
| Lateral angle q of the lower tuyeres 13: (present invention), 0° (prior art) | 30° |
| Raw material for the molten metal: | iron ore |
| Carbon material: | coal |

Table 3

| | Prior art | Present invention |
|---|---|---|
| Molten metal temperature (°C) | ca. 1400 | ca. 1400 |

Table 3 (continued)

|  | Prior art | Present invention |
|---|---|---|
| Slag temperature (°C) | ca. 1500 | ca. 1400 |
| Temperature difference between molten metal and slag (°C) | ca. 100 | ca. 0 |
| Temperature of combustible gas from furnace (°C) | ca. 1700 | ca. 1600 |
| Extracted heat quantity index of water-cooled panel | 100 | 83 |
| Unit requirement index of carbon material | 100 | 93 |
| Unit requirement index of oxygen | 100 | 89 |

Although reduction of iron has been explained in the present example, it is needless to say that the present invention can also be applied to a smelting reduction apparatus for producing nonferrous metals and iron alloys such as Cr, Ni and Mn by similar smelting reduction.

In the furnace structure of the smelting reduction apparatus according to the present invention for directly producing a molten metal by charging a metal raw material, a carbon material and a flux into the furnace, and blowing oxygen and/or oxygen-enriched gas into a slag through lower tuyeres provided in such a manner that the lower tuyeres penetrate the sides of the furnace in the horizontal direction toward the slag, the lower tuyeres are directed in the lateral direction from the direction vertical to the longer sides of the furnace at an angle of 15 to 45° toward the direction opposite to that to a raw material charging inlet. As a result, effects as described below are achieved.

*    The concentrations of the iron raw material and the carbon material in the slag can be made homogeneous in the longer side direction of the furnace having a rectangular horizontal section by allowing the slag portion above the lower tuyeres to flow in the longer side direction thereof in the direction opposite to the raw material charging inlet. Consequently, the production amount may be increased, that is, the number of the raw material charging inlets may be made one even when the longer side of the furnace having a rectangular horizontal section is extended. The furnace may thus be operated with a single raw material charging apparatus, and the apparatus cost can be reduced.
*    The space between the raw material charging inlet and the gas outlet may be extended by using a single raw material charging inlet. As a result, an increase in the amounts of the metal raw material and the carbon material which get on the flow of the combustible gas generated in the furnace and are directly scattered and carried to the gas outlet can be prevented even when the particle sizes of the materials are small.

Furthermore, the slag portion below the lower tuyeres flows in the direction opposite to that of the slag portion above the lower tuyeres, namely in the direction of the raw material charging inlet. As a result, the slag portion directly above the interface between the molten pig iron and the slag is allowed to flow, and the relative speed between the slag and the molten pig iron is increased. The quantity of heat transfer from the slag to the molten pig iron may, therefore, be increased, and consequently the temperature difference between the slag and the molten metal may be decreased. Effects as described below can thus be achieved.

*    The temperature difference between the slag and the molten pig iron is decreased, and the temperatures of the slag and the combustible gas vented from the furnace can be lowered in accordance with the decrease in the temperature difference. The unit requirements of the carbon material and oxygen are lowered in accordance with the heat quantity corresponding to the temperature decreases.
*    The temperatures of the slag and the combustible gas vented from the furnace can be lowered, and when an area of the inner surface of the furnace facing the secondary combustion zone and the slag is lined with a water-cooled panel, the heat quantity extracted by the water-cooled panel is decreased. As a result, the unit requirements of the carbon material and oxygen are decreased in accordance with the heat quantity corresponding to the decrease in the extracted heat quantity.
*    The temperature of the combustible gas vented from the furnace can be lowered, and when an area of the inner surface of the furnace facing the secondary combustion zone is lined with refractories, the wear rate of the refractories can be decreased. Consequently, the frequency of repairing and patching can be decreased.
*    Since particles of the molten metal are not blown up into the slag, the molten metal is not reoxidized with oxygen or oxygen-enriched gas blown into the slag through the lower tuyeres. Accordingly, the reduction rate is improved, that is, the production rate is improved.
*    Since particles of the molten metal are not blown up into the slag, the heat content and the heat conductivity of the slag decrease, and the furnace wall and the lower tuyeres contacted with the slag can be made water-cooled structures, whereby by they can be used semipermanently. As a result, the cost of the refractories and the tuyeres can be extremely reduced and the frequency of stopping operations to repair and exchange can be drastically decreased.

* Since the tuyeres below the metal bath surface are not required, the cost of the refractories and the tuyeres can be extremely reduced and the frequency of stopping operations to repair and exchange can be drastically decreased.

Example 5

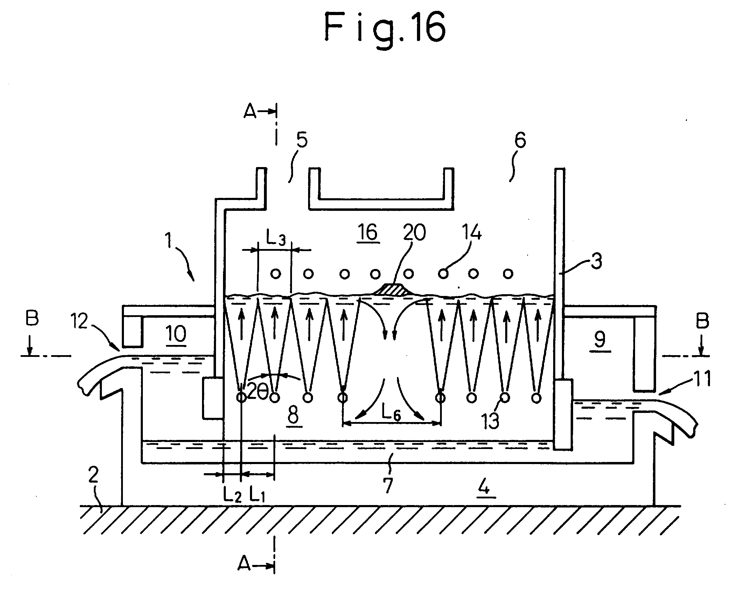

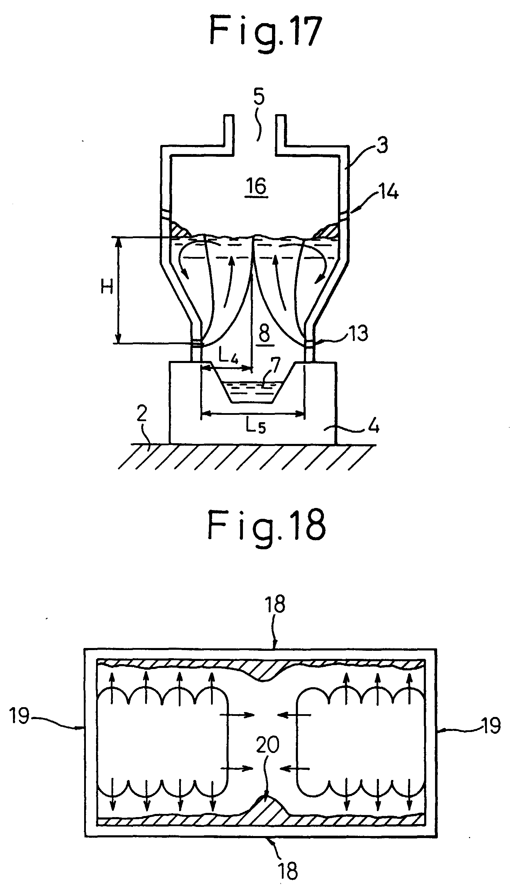

Fig. 16 is a vertical sectional view showing a furnace structure in one embodiment of the smelting reduction apparatus according to the first aspect of the fourth invention. Fig. 17 is a sectional view along line A-A in Fig. 16, and Fig. 18 is a sectional view along line B-B in Fig. 16.

Ascending flows of a slag 8 are generated above lower tuyeres 13 in the smelting reduction apparatus.

The spread width $L_3$ of a gas blown through the lower tuyeres, on the top surface of the slag 8 can be expressed by the following formula:

$$L_3 = 2 \times H \times \tan \theta$$

wherein H is the height of the slag bath surface from the lower tuyeres and $2\theta$ is the spread angle of the gas.

Attention is now paid to a section in the longer side direction of the furnace, namely Fig. 16. A descending flow of the slag 8 is generated in the central portion of the slag 8 in the longer side direction of the furnace by setting the spacing $L_6$ between two pairs of the lower tuyeres in the central part in the longer side direction of the furnace as follows: $L_3 < L_6 \leq 3 \times L_3$. The spacing L6 is defined as mentioned above for reasons as described below. When $L_6$ is set as follows: $L_6 \leq L_3$, the spreads of the gas blown through the above-mentioned two pairs of the lower tuyeres mutually overlap on the top surface of the slag 8, and as a result an ascending flow of the slag 8 is generated in the central portion thereof in the longer side direction of the furnace, whereby a descending flow is not generated. Conversely, when $L_6$ is set as follows: $L_6 > 3 \times L_3$, a slag portion which does not flow appears in the central portion in the longer side direction of the furnace.

On the other hand, the distance $L_2$ from the lower tuyeres 13 to the shorter side 19 of the rectangular furnace is set as follows: $L_2 \leq L_3/2$. As a result, the range from the lower tuyeres 13 to the shorter side 19 thereof becomes within the range of the spread width of the gas blown through the lower tuyeres 13, on the top surface of the slag 8. An ascending flow of the slag 8 is, therefore, generated near each shorter side 19 of the furnace, and a flow of the slag in the horizontal direction toward the central portion in the longer side direction of the furnace is generated from each shorter side 19 thereof, on the bath surface portion of the slag 8.

As a result, a carbon material 20 which has a low specific gravity, compared with the slag 8, is pushed in the central direction in the longer side direction of the furnace by the flow of the slag in the horizontal direction as mentioned above, and floats near the central portion in the longer side direction of the furnace in the bath surface portion of the slag 8. Since the carbon material floating near the central portion in the longer side direction of the furnace suffers no friction resistance of the furnace side walls, it relatively easily enters the descending flow of the slag 8 near the central portion in the longer side direction of the furnace and included in the slag 8. The suspended amount of the carbon material 20 in the slag 8 near the central portion in the longer side direction of the furnace is thus increased.

The above-mentioned tendency has been confirmed by the present inventors by conducting a model test using water in place of the slag 8 and a material such as cork having a low specific gravity, compared with water, in place of the carbon material.

Example 6

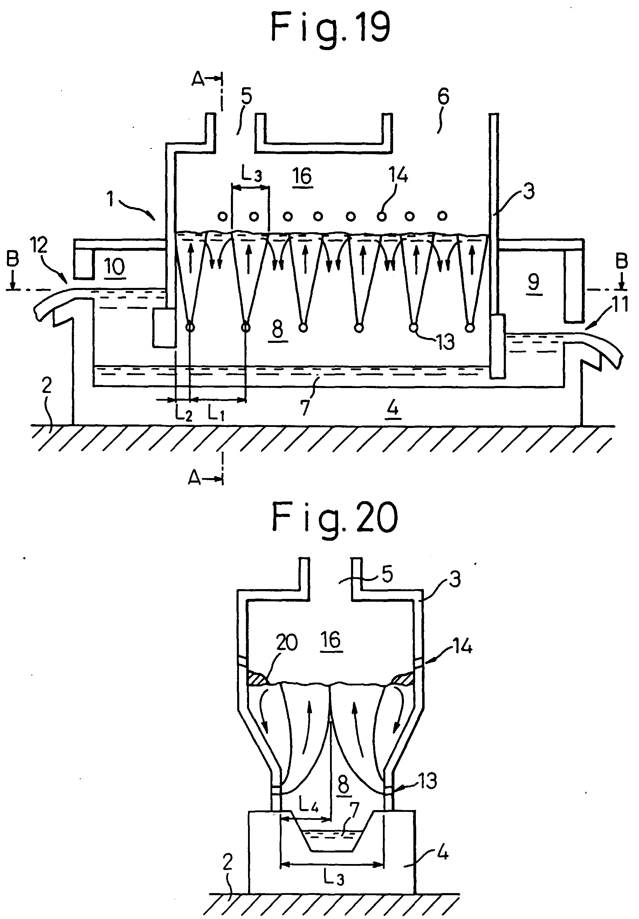

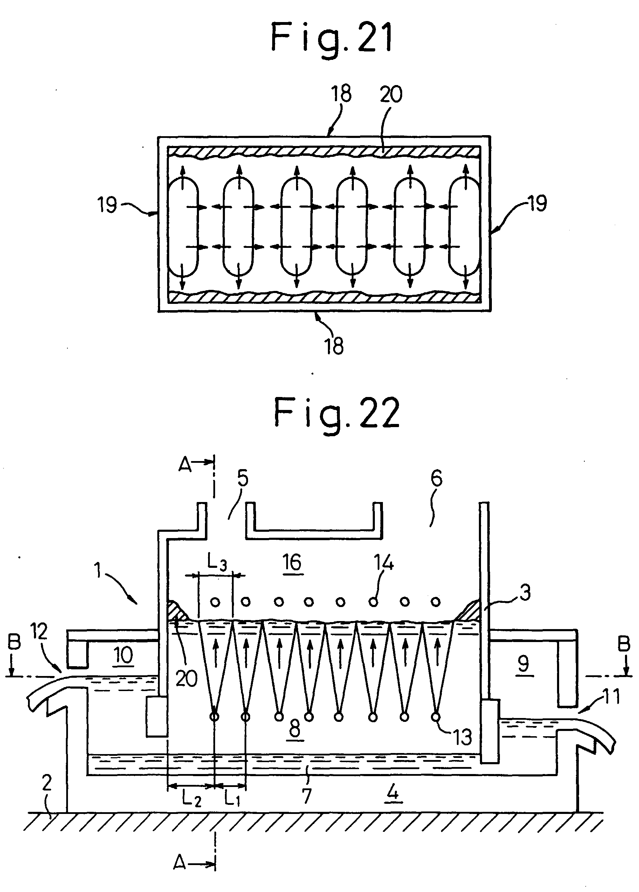

Fig. 19 is a vertical sectional view showing a furnace structure in one embodiment of the smelting reduction apparatus according to the second aspect of the fourth invention. Fig. 20 is a sectional view along line A-A in Fig. 19, and Fig. 21 is a sectional view along line B-B in Fig. 19.

Ascending flows of a slag 8 are generated above lower tuyeres 13 in the smelting reduction apparatus.

Attention is now paid to a section in the longer side direction of the furnace, namely Fig. 19. A descending flow of the slag 8 is generated in each central portion between any pair of adjacent lower tuyeres 13 by setting the spacing $L_1$ between the pair of the adjacent lower tuyeres as follows: $L_3 < L_1 \leq 2 \times L_3$. The spacing $L_1$ is defined as mentioned above for reasons as described below. When $L_1$ is set as follows: $L_1 \leq L_3$, the spreads of the gas blown through the lower tuyeres 13 mutually overlap on the top surface of the slag 8, and as a result an ascending flow of the slag 8 is generated in the central portion between the adjacent lower tuyeres, whereby a descending flow is not generated. Conversely, when $L_1$ is set as follows: $L_1 > 2 \times L_3$, a slag portion which does not flow appears in the central portion therebetween.

On the other hand, the distance $L_2$ from the lower tuyeres 13 to the shorter side 19 of the rectangular furnace is set as follows: $L_2 \leq L_3/2$. As a result, the range from the lower tuyeres 13 to, the shorter side 19 thereof becomes within the range of the spread width of the gas blown through the lower tuyeres, 13 on the top surface of the slag 8. An ascending flow of the slag 8 is, therefore, generated near the shorter side 19 of the furnace.

Accordingly, in the bath surface portion of the slag 8, a flow is generated from near the shorter side 19 of the furnace in the horizontal direction toward the central portion between the adjacent pair of the tuyeres, and a flow is generated near the portion directly above each lower tuyere 13 in the horizontal direction toward the central portion between the lower tuyere 13 and its adjacent lower tuyere.

As a result, in the bath surface portion of the slag 8, the carbon material 20 which has a low specific gravity, compared with the slag 8, is pushed to the central portions each situated between any pair of adjacent lower tuyeres by the flows as mentioned above, whereby the carbon material 20 floats near the central portions. Since the carbon material 20 floating near the central portions as mentioned above suffers no friction resistance at the furnace side walls, it relatively easily enters the descending flows of the slag 8 near the central portions among the lower tuyeres and is included in the slag 8. The amount of the suspended carbon material 20 in the slag 8 near the central portions among the lower tuyeres is thus increased.

The above-mentioned tendency has been confirmed by the present inventors by conducting a model test using water in place of the slag 8 and a material such as cork having a low specific gravity, compared with water, in place of the carbon material.

Example 7

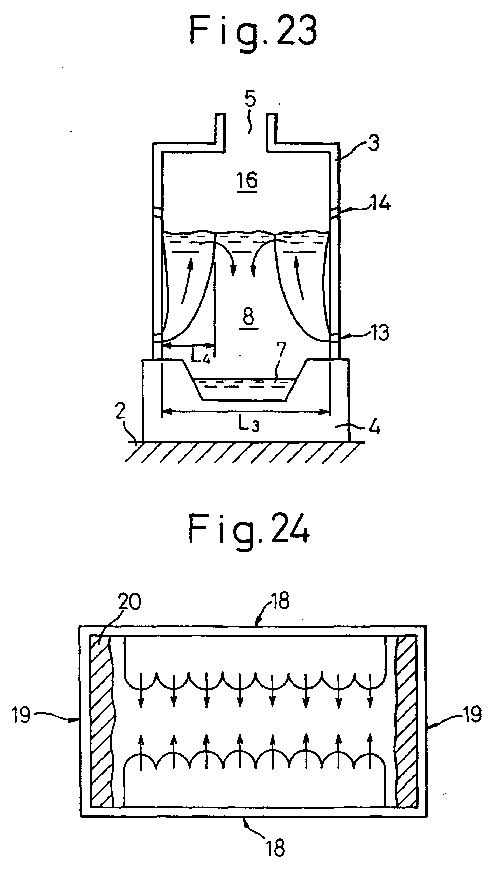

Fig. 22 is a vertical sectional view showing a furnace structure in one embodiment of the smelting reduction apparatus according to the third aspect of the fourth invention. Fig. 23 is a sectional view along line A-A in Fig. 22, and Fig. 24 is a sectional view along line B-B in Fig. 22.

An ascending flow of a slag 8 is generated above lower tuyeres 13 in the smelting reduction apparatus.

Attention is now paid to a section in the shorter side direction of the furnace, namely Fig. 23. A descending flow of the slag 8 is generated in the central portion of the slag 8 in the shorter side direction of the furnace by setting the length $L_5$ in the shorter side direction of the horizontal section at the height of the lower tuyeres 13 of the furnace as follows: $2 \times L_4 < L_5 \leq 4 \times L_4$, wherein $L_4$ is a coverage in the horizontal direction of the gas blown into the slag 8 through the lower tuyeres 13. The length $L_5$ is defined as mentioned above for reasons as described below. When $L_5$ is set as follows: $L_5 \leq 2 \times L_4$, the spreads of the gas blown through the lower tuyeres 13 mutually overlap on the top surface of the slag 8, and as a result an ascending flow of the slag 8 is generated in the central portion thereof in the shorter side direction of the furnace, whereby a descending flow is not generated. Conversely, when $L_5$ is set as follows: $L_5 < 4 \times L_4$, a slag portion which does not flow appears in the central portion in the shorter side direction of the furnace.

On the other hand, since the longer sides of the rectangular furnace are formed with vertical walls, ascending flows of the slag 8 are generated near the longer sides 18 of the furnace, and descending flows thereof are generated in the central portion in the shorter side direction of the furnace. Flows of the slag in the horizontal direction toward the central portion in the shorter side direction of the furnace are generated from the longer sides 19 thereof of the furnace, on the bath surface portion of the slag 8.

As a result, carbon material 20 which has a low specific gravity, compared with the slag 8, is pushed in the central direction in the shorter side direction of the furnace by the flows of the slag in the horizontal direction as mentioned above in the surface portion of the bath of the slag 8, and floats near the central portion in the shorter side direction of the furnace in the surface portion of the bath of the slag 8. Since the carbon material 20 floating near the central portion in the shorter side direction of the furnace suffers no friction resistance of the furnace side walls, it relatively easily enters the descending flow of the slag 8 near the central portion in the shorter side direction of the furnace and included in the slag 8, whereby the suspended amount of the carbon material 20 in the slag 8 is increased.

The above-mentioned tendency has been confirmed by the present inventors by conducting a model test using water in place of the slag 8 and a material such as cork having a low specific gravity, compared with water, in place of the carbon material.

Example 8

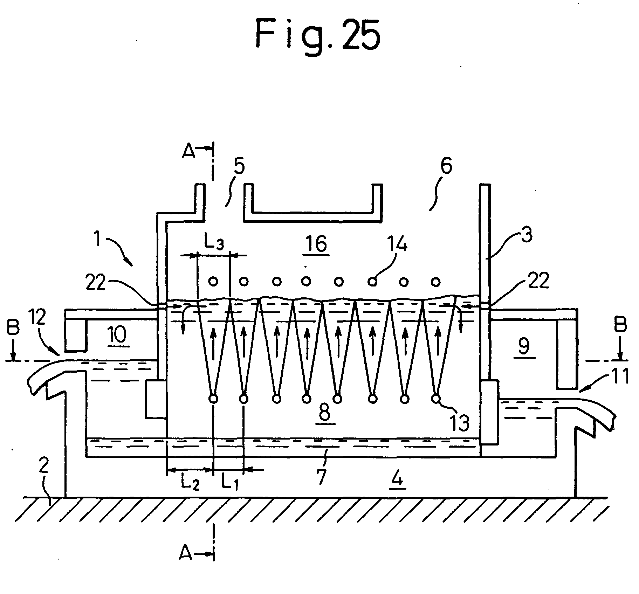

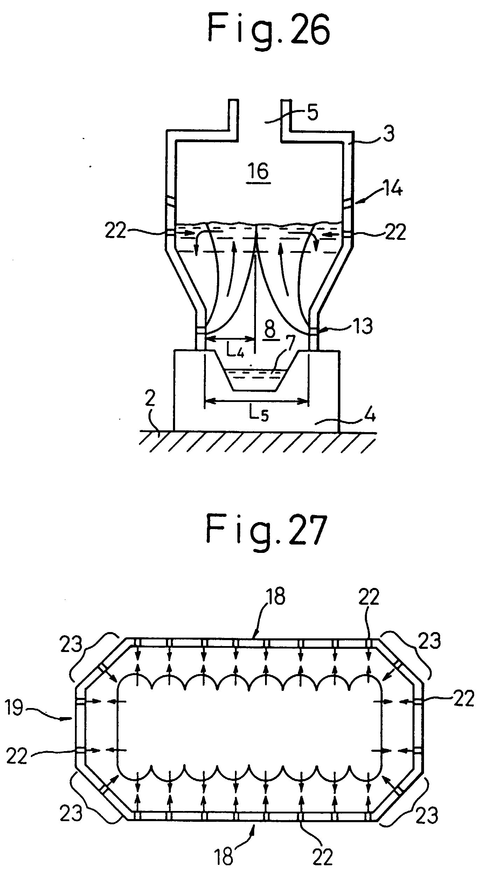

Fig. 25 is a vertical sectional view showing a furnace structure in one embodiment of the smelting reduction apparatus according to the fifth aspect of the fourth invention. Fig. 26 is a sectional view along line A-A in Fig. 25, and Fig. 27 is a sectional view along line B-B in Fig. 25.

In the smelting reduction apparatus, nozzles 22 for blowing a gas into a slag 8 in the horizontal direction are provided in longer sides 18 and/or shorter sides 19 of a rectangular furnace above the tuyeres 13 mentioned above and up to the height corresponding to the top surface of the slag 8 within the furnace. Moreover, corners 23 of the furnace having a rectangular horizontal section are chamfered.

As a result, a carbon material 20 having a low specific gravity, compared with the slag 8, is pushed toward the center of the furnace 1 in the surface portion of the bat of the slag 8 from longer sides 18 and/or shorter sides 19 by the gas blown through the nozzles 22 provided in the horizontal direction toward the slag 8. Since the carbon material suffers no friction resistance of the furnace side walls, it relatively easily enters the descending flows of the slag 8 and is included therein, whereby the amount of the carbon material 20 suspended therein is increased.

On the other hand, since the area of corners 23 of the furnace in the surface portion of the bath of the slag where a particularly large amount of the carbon material tends to be retained is reduced, the amount of the carbon material 20 floating in the surface portion of the bath of the slag 8 is decreased, and the amount of the carbon material 20 suspended in the slag 8 is relatively increased.

The above-mentioned tendency has been confirmed by the present inventors by conducting a model test using water in place of the slag 8 and a material such as cork having a low specific gravity, compared with water, in place of the carbon material.

Although the examples mentioned above have been explained by making reference to the production of iron by reduction, it is needless to say that the present invention may also be applied to smelting reduction apparatuses for producing a nonferrous metal and a ferrous alloy such as chromium, nickel and manganese produced by smelting reduction methods similar to those mentioned above.

In the furnace structure of the smelting reduction furnace according to the first aspect of the fourth invention, the spacing $L_6$ between the two pairs of the lower tuyeres in the central portion in the longer side direction of the rectangular furnace is set as follows:

$$2 \times H \times \tan \theta < L_6 < 6 \times H \times \tan \theta$$

wherein H is the height of the slag bath surface from the lower tuyeres, and $2\theta$ is a spread angle of the gas blown through the lower tuyeres, and the distance $L_2$ from the lower tuyeres which are nearest to the shorter side of the rectangular furnace to the shorter side thereof is set as follows: $L_2 \leq H \times \tan \theta$. As a result, ascending flows of the slag are generated near the shorter sides of the furnace, and a descending flow of the slag is generated in the central portion in the longer side direction of the furnace. In the bath surface portion of the slag, flows of the slag in the horizontal direction from the shorter sides of the furnace toward the central portion in the longer side direction of the furnace are generated. As a result, the carbon material having a low specific gravity, compared with the slag, is pushed to the central direction in the longer side direction of the furnace by the above-mentioned flow in the horizontal direction, and floats near the central portion in the longer side direction of the furnace in the bath surface portion of the slag. Since the carbon material floating near the central portion suffers no friction resistance of the furnace side walls, it enters the descending flow of the slag near the central portion relatively easily, and is included in the slag to increase the amount of the carbon material suspended in the slag.

In the second aspect of the fourth invention, the spacing $L_1$ of the lower tuyeres is set as follows: $2 \times H \times \tan \theta < L_1 \leq 4 \times H \times \tan \theta$, and the distance $L_2$ from the lower tuyeres to the shorter side of the furnace is set as follows: $L_2 \leq H \times \tan \theta$. As a result, an ascending flow of the slag is generated near the portion directly above each lower tuyere and near each shorter side of the furnace, and a descending flow of the slag is generated in the central portion between each pair of adjacent lower tuyeres. In the bath surface portion of the slag, a flow of the slag is generated in the horizontal direction from near the portion directly above each lower tuyere toward near the central portion between the above-mentioned tuyere and its adjacent lower tuyere. Consequently, the carbon material having a low specific gravity, compared with the slag, is pushed to near the central portion between the adjacent two lower tuyeres by the flow of the slag in the horizontal direction as mentioned above, and floats near the central portion in the bath surface portion or the slag. Since the floating carbon material suffers no friction resistance at the furnace side walls, it enters the descending flow of the slag relatively easily, and is included in the slag to increase the amount of the suspended carbon material.

In the third aspect of the fourth invention, the length $L_5$ in the shorter side direction of the horizontal section of the furnace at the height of the lower tuyeres is set as follows:

$$2 \times L_4 < L_5 \leq 4 \times L_4$$

wherein $L_4$ is a coverage in the horizontal direction of the gas blown into the slag through the lower tuyeres. As a result, ascending flows of the slag near the longer sides of the furnace are generated, and descending flows of the slag are generated in the central portion in the longer side direction of the furnace. In the bath surface portion of the slag, flows in the horizontal direction from the longer sides of the furnace to the central portion in the shorter side direction of the furnace are generated. As a result, the carbon material having a low specific gravity, compared with the slag, is pushed to the central direction in the shorter side direction of the furnace by the above-mentioned flow in the horizontal direction, and floats near the central portion in the shorter side direction of the furnace in the bath surface portion of the slag. Since the carbon material floating near the central portion suffers no friction resistance at the furnace side walls, it enters the descending flow of the slag near the central portion in the shorter side direction of the furnace relatively easily, and is included in the slag to increase the amount of the carbon material suspended in the slag.

In the fourth aspect of the fourth invention, nozzles for blowing a gas in the horizontal direction toward the slag are provided in the longer sides and/or shorter sides of the rectangular furnace up to the height corresponding to the top surface of the slag within the furnace. As a result, the carbon material having a low specific gravity, compared with the slag, is pushed toward the center of the rectangular furnace from the longer sides and/or shorter sides thereof. Since the carbon material suffers no friction resistance at the furnace side walls, it enters the descending flow of the slag relatively easily, and is included in the slag to increase the amount of the suspended carbon in the slag.

In the fifth aspect of the fourth invention, the corners of the furnace having a rectangular horizontal section are chamfered or rounded. As a result, the area of the furnace corner portions in the bath surface portion of the slag where a particularly large amount of the carbon material tends to be retained is decreased. Accordingly, the amount of the carbon material floating in the bath surface portion of the slag is decreased, and the amount of the carbon material suspended in the slag is relatively increased.

Effects as mentioned below can be expected from what is described above.

*	The carbon material is prevented from floating and being retained near the furnace sides in the slag bath surface portion, namely near the longer sides and the shorter sides of the furnace having a rectangular horizontal section, and the amount of the carbon material included and suspended in the molten slag is increased, whereby the reduction reaction of the metal material, namely the metal oxide with the carbon material in the molten slag may be promoted.

*	The amount of the carbon material suspended in the central portion of the slag in the longer side direction is increased, and the concentration of the suspended carbon material in the slag is made homogeneous, whereby the reduction reaction of the metal material, namely the metal oxide and the carbon material in the molten slag may be made uniform.

*	Alternatively, the concentration of the suspended carbon material in the central portion in the longer side direction of the furnace is made higher than that near the shorter sides of the furnace, whereby the reduction rate of the carbon material in the central portion, which is not cooled by the water-cooled panel, in the longer side direction of the furnace may be made higher than that in the portions near the shorter sides of the furnace which are cooled by the water-cooled panel.

Example 9

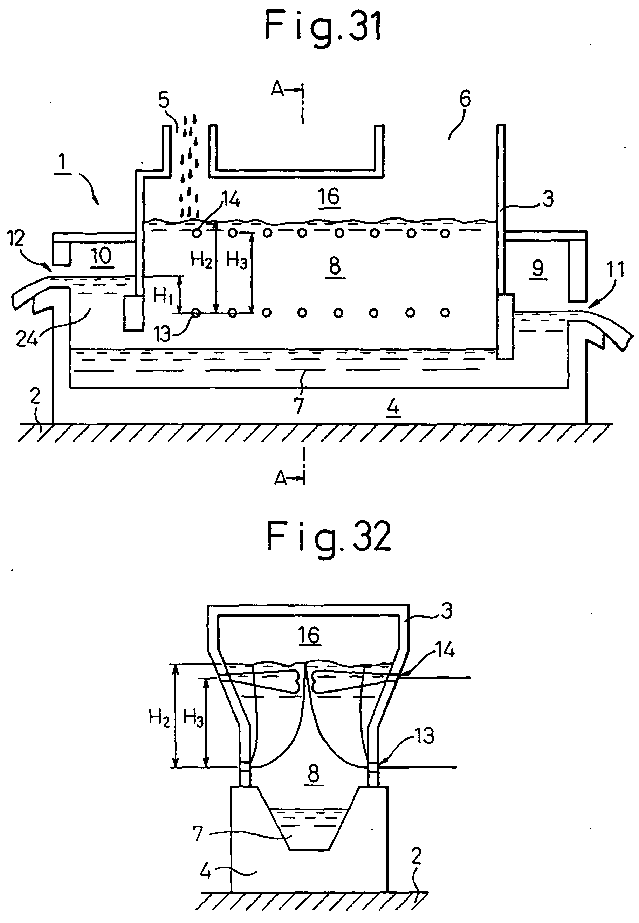

Fig. 31 is a vertical sectional view showing a furnace structure in one embodiment of the smelting reduction apparatus according to the fifth invention. Fig. 32 is a sectional view along line A-A in Fig. 31.

In order to increase a decrease in the unit requirement of the carbon material at the time of increasing the in-furnace secondary combustion rate, increasing the quantity of heat transfer of the heat of reactions of the formulas (4) and (5) to the foaming slag (8) is effective as described above. In the present example, the upper tuyeres are provided in the sides of the furnace 1 above the lower tuyeres and up to the position corresponding to the top surface of the slag within the furnace, and oxygen and/or oxygen-enriched gas is blown into the slag therewithin, whereby the secondary combustion reactions of the formulas (4) and (5) are effected in the foaming slag 8. Since the heat of the secondary combustion reactions directly heats the foaming slag 8, there is substantially no temperature difference between the combustible gas generated by the secondary combustion reactions of the formulas (4) and (5) in the slag and released to an upper space 16 and the foaming slag 8.

Next, the height of the top surface of the foaming slag 8 within the furnace in the present example will be explained by making reference to Figs. 31 and 32.

In the present example, an explanation will be made of a smelting reduction apparatus wherein a tapping hole 11 and a cinder notch 12 are provided at different heights, the volumes of a molten pig iron 7 and the foaming slag 8 held within the furnace are controlled by the principle of siphon based on the height difference, and the portions of the molten pig iron and the slag exceeding the controlled volumes are automatically discharged. However, it is needless to say that the present invention may also be applied to other smelting reduction apparatuses in which other tapping and slag discharge systems are employed, for example, a tap hole opening system in a blast furnace.

In the tapping and slag discharge system based on the principle of siphon in the present example, the relationship between a height $H_1$ from the lower tuyeres 13 to the cinder notch 12 and a height $H_2$ from the lower tuyeres 13 to the top surface of the foaming slag 8 is expressed by the following formula:

$$H_1 = H_2 \times \gamma_2/\gamma_1 \tag{7}$$

wherein $\gamma_2$ is the specific gravity of a repressed slag 24 in a slag pool 10, and $\gamma_2$ is the specific gravity of the foaming slag 8 within the furnace.

Since foams are convected in the foaming slag 8 with CO gas generated therein by the reactions of the formulas (1), (2) and (3), the specific gravity $\gamma_1$ of the foaming slag (8) situated within the furnace and above the lower tuyeres 13 becomes from 1/2 to 1/3 of the specific gravity $\gamma_2$ of the repressed slag 24 in the slag pool 10. Accordingly, the present inventors have confirmed that the height $H_1$ from the lower tuyeres 13 to the tapping hole 12 becomes from twice to three times the height $H_2$ from the lower tuyeres 13 to the top surface of the foaming slag 8 by conducting test operations, etc.

Since a height $H_3$ from the lower tuyeres 13 to the tip of the upper tuyeres 14 is set as follows: $H_1 < H_3 < 3 \times H_1$, the tip of the upper tuyeres 14 is to be provided at sites above the lower tuyeres 13 and up to the height corresponding to the top surface of the foaming slag 8 within the furnace.

Example 10

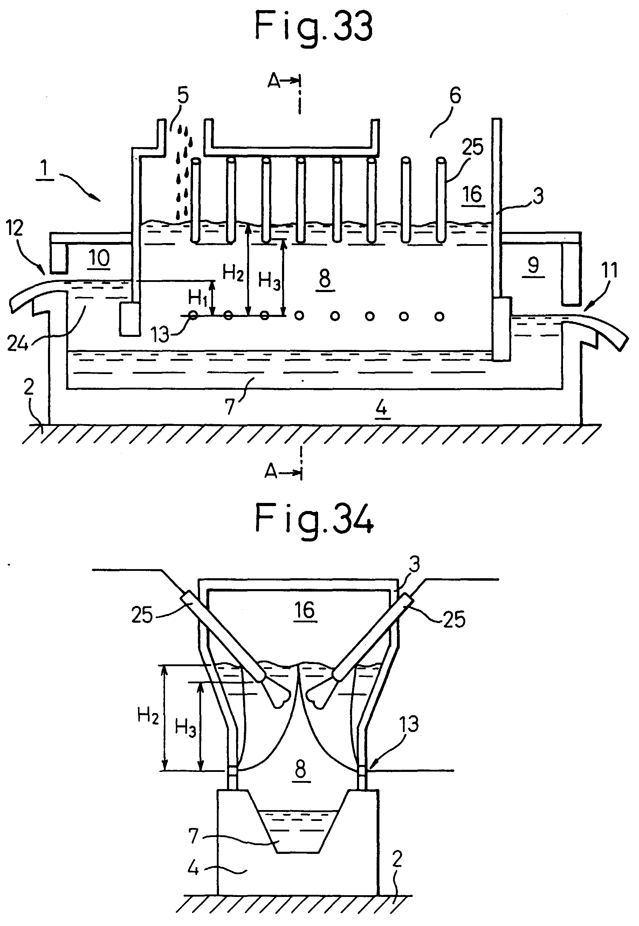

Fig. 33 is a vertical sectional view showing a furnace structure in another embodiment of the smelting reduction apparatus according to the fifth invention. Fig. 34 is a sectional view along line A-A in Fig. 33.

Another embodiment of the fifth invention will be explained by making reference to Figs. 33 and 34.

In the present example, upper lances 25 are inserted downward and obliquely from the side walls of a furnace 1 from the top surface or the slag within the furnace, and the tips of the upper tuyeres 14 are located at sites above the lower tuyeres and up to the height corresponding to the top surface of a slag within the furnace. Oxygen and/or oxygen-enriched gas is thus blown into the slag within the furnace.

Example 11

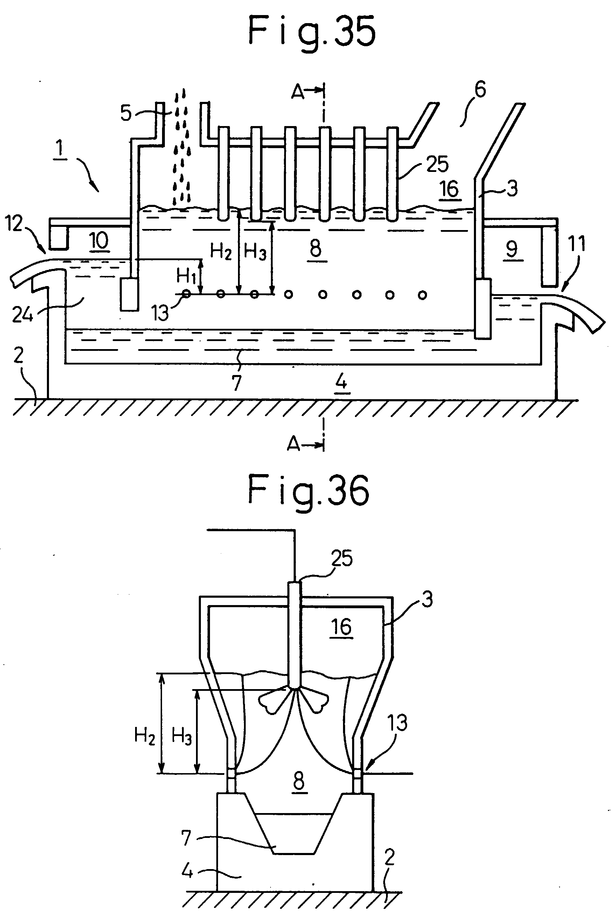

Fig. 35 is a sectional view showing a furnace structure in still another embodiment of the smelting reduction apparatus according to the fifth invention. Fig. 36 is a sectional view along line A-A in Fig. 35.

Still another embodiment of the fifth invention will be explained by making reference to Figs. 35 and 36.

In the present example, upper lances 25 are downwardly and vertically inserted from the top surface of a furnace 1, and the tips of the upper tuyeres 14 are located at sites above the lower tuyeres and up to the height corresponding to the top surface of a slag within the furnace. Oxygen and/or oxygen-enriched gas is thus blown into the slag within the furnace.

Since oxygen and/or oxygen-enriched gas is blown into the slag within the furnace also in Examples 10 and 11, the secondary combustion reactions of the formulas (4) and (5) are effected in the foaming slag 8, and the heat of the secondary combustion reactions heat the foaming slag 8 directly. Consequently, the temperature difference between the foaming slag 8 and the combustible gas which is generated by the secondary combustion reactions of the formulas (4) and (5) in the slag and released into an upper space 16 substantially disappears.

Since the height from the lower tuyeres 13 to the tips of the upper lances 25 is set at $(1-3) \times H_1$ also in examples 10 and 11, the tips of the upper lances 25 are to be provided above the lower tuyeres 13 and up the height corresponding to the top surface of the foaming slag 8 within the furnace.

Furthermore, in Examples 10 and 11, the upper tuyeres 14 can preferably be elevated and lowered freely in preparation for repairing the upper lances 25.

Table 4 shows an instance of the unit requirements of a carbon material and oxygen in a smelting reduction apparatus according to the prior art proposed in Japanese Patent Kokai Publication No. 1-502276 and an example of those in a smelting reduction apparatus according to the present invention. The quantity of heat of the combustible gas and that of heat extracted by the water-cooled panel have decreased by about 16% and about 38%, respectively. As a result, the unit requirements of the carbon material and oxygen have decreased by about 14% and about 22%, respectively.

Table 4

|  | Prior art | Present invention |
|---|---|---|
| Slag temperature (°C) | ca. 1500 | ca. 1500 |
| Temperature of combustible gas from furnace (°C) | ca. 1700 | ca. 1500 |
| Temperature difference between combustible gas and slag (°C) | ca. 200 | ca. 0 |

Table 4 (continued)

|  | Prior art | Present invention |
|---|---|---|
| Heat quantity index of combustible gas | 100 | 84 |
| Extracted heat quantity index of water-cooled panel | 100 | 62 |
| Unit requirement index of carbon material | 100 | 86 |
| Unit requirement index of oxygen | 100 | 78 |

Although the present example has been explained by making reference to the production of iron by reduction, it is needless to say that the present invention may also be applied to smelting reduction apparatuses for producing a nonferrous metal and a ferrous alloy such as chromium, nickel and manganese produced by smelting reduction methods similar to those mentioned above.

Furthermore, although the present example has been explained by making reference to a smelting reduction apparatus having a rectangular horizontal section of the furnace, it is needless to say that the present invention may also be applied to a smelting reduction apparatus having a circular horizontal section of the furnace.

As explained above, in the fifth invention, the tips of the upper tuyeres are provided above the lower tuyeres and at sites up to the height of the top surface of the slag within the furnace, and as a result CO gas generated in the foaming slag is and the hydrogen component in the carbon material are secondarily combusted in the slag with oxygen blown into the slag through the upper tuyeres. Heat transfer from the upper space to the slag, therefore, becomes unnecessary. Consequently, the temperature difference between the slag and the combustible gas may be decreased without blowing a gas for stirring the metal through tuyeres below the surface of the metal bath. Effects as described below may thus be expected.

*    The temperature difference between the slag and the combustible gas decreases, and the temperature of the, combustible gas vented from the furnace can be lowered in accordance with the decrease. The unit requirements of the carbon material and oxygen can be decreased in accordance with the decrease in heat quantity corresponding to the temperature decrease.

*    The temperature of the combustible gas vented from the furnace can be lowered, and the quantity of heat extracted by the area of the water-cooled panel facing the upper space of the furnace is lowered. The unit requirements of the carbon material and oxygen are decreased in accordance with the heat quantity.

*    Since reactions of the secondary combustion are effected in the slag, the upper space may be reduced. As a result, the quantity of heat extracted by the area of the water-cooled panel facing the upper space of the furnace is lowered, and the unit requirements of the carbon material and oxygen are decreased in accordance with the heat quantity. Moreover, the furnace height may be decreased, and the apparatus cost may be reduced.

*    Since particles of the molten metal are not blown into the slag, the molten metal is not reoxidized with oxygen or oxygen-enriched gas blown into the slag through the lower tuyeres, whereby the reduction rate, namely the production rate is improved.

*    Since particles of the molten metal are not blown into the slag, the heat content and the heat conductivity of the slag are small, and the furnace wall and the lower tuyeres contacted with the slag can be made water-cooled structures whereby they can be used semipermanently. As a result, the cost of the refractories and the tuyeres can be greatly reduced, and the frequency of stopping operations for repairing and exchanging is drastically decreased.

*    Since tuyeres below the surface of the metal bath are not required, the cost of the refractories and the tuyeres is greatly reduced, and the frequency of stopping operations for repairing and exchanging is drastically decreased.

<u>Example 12</u>

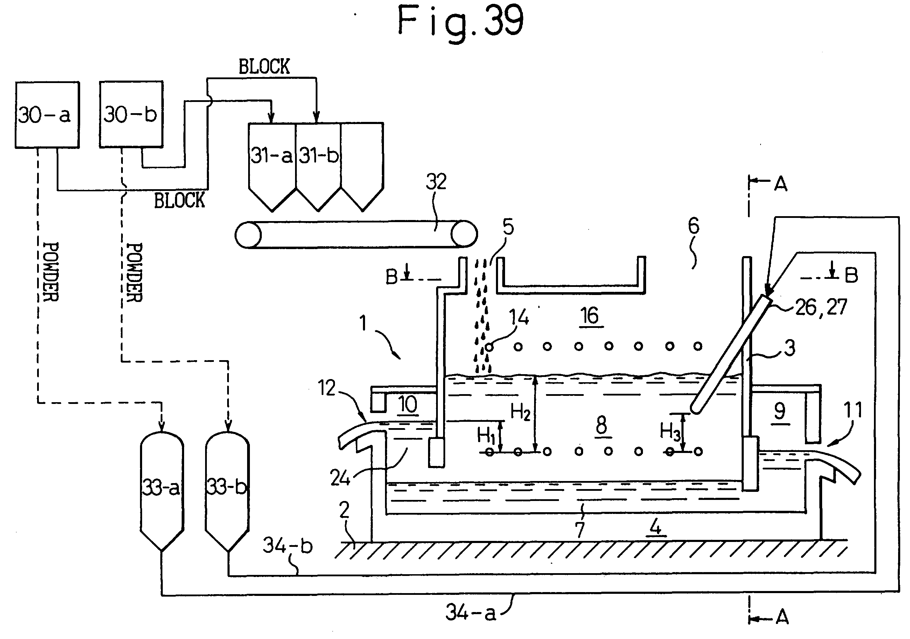

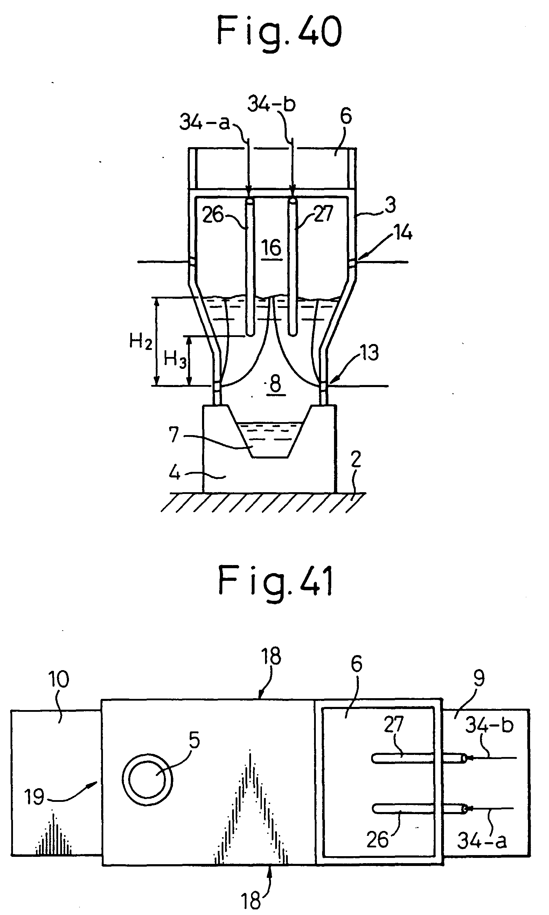

Fig. 39 is a vertical sectional view showing a furnace structure in one embodiment of the smelting reduction apparatus according to the sixth invention. Fig. 40 is a sectional view along line A-A in Fig. 39. Fig. 41 is a sectional view along line B-B in Fig. 39.

In the smelting reduction apparatus wherein a metal raw material, a carbon material and a flux are charged in a furnace 1, and a molten pig iron 7 is directly produced, oxygen and/or oxygen-enriched gas is blown into a foaming slag 8 through lower tuyeres 13 which are provided in such a manner that the tuyeres penetrate longer sides 18 of the furnace having a rectangular horizontal section in the horizontal direction toward the slag. One raw material charging inlet 5 is provided at one end of the top surface of the furnace in the longer side direction. A gas outlet 6 for a combustible gas generated from the furnace is provided at the other end thereof.

A lance 26 for blowing the carbon material in powder form and a lance 27 for blowing the iron raw material in powder form are provided on a shorter side 19 on the same end as the gas outlet 6 in the longer side direction, and they are each obliquely inserted in the foaming slag 8. The tips of the lance 26 for blowing the carbon material and the lance 27 for blowing the iron raw material are provided at sites above the lower tuyeres 13 and up to the height corresponding to the top surface of the foaming slag 8.

The carbon material is classified into a carbon material in block form (at least about 2 mm) and a carbon material in powder form (up to about 2 mm) by a sieving apparatus 30-a. The carbon material in a block form is charged into a hopper 31-a, transferred by a conveyor 32, and charged into the furnace 1 through the raw material charging inlet 5. On the other hand, the carbon material in powder form is charged into a blowing apparatus 33-a, transferred through a blowing tube 34-a, and blown into the foaming slag 8 within the furnace 1 through the lance 26 for blowing the carbon material.

The iron raw material is classified into an iron raw material in a block form (at least about 2 mm) and an iron raw material in a powder form (up to about 2 mm). The iron raw material in a block form is charged into a hopper 31-b, transferred by the conveyor 32, and charged into the furnace 1 through the raw material charging inlet 5. On the other hand, the iron raw material in powder form is charged into a blowing apparatus 33-b, transferred through a blowing tube 34-b, and blown into the foaming slag 8 within the furnace 1 through the lance 27 for blowing the iron raw material.

Next, the height of the top surface of the foaming slag 8 within the furnace in the present example will be explained by making reference to Fig. 39.

In the present example, an explanation will be made of a smelting reduction apparatus wherein a tapping hole 11 and a cinder notch 12 are provided at different heights, the volumes of a molten pig iron 7 and the foaming slag 8 held within the furnace are controlled by the principle of siphon based on the height difference, and the portions of the molten pig iron and the slag exceeding the controlled volumes are automatically discharged. However, it is needless to say that the present invention may also be applied to other smelting reduction apparatuses in which other tapping and slag discharge systems are employed, for example, a tap hole opening system in a blast furnace.

In the tapping and slag discharge system based on the principle of siphon in the present example, the relationship between a height $H_1$ from the lower tuyeres 13 to the cinder notch 12 and a height $H_2$ from the lower tuyeres 13 to the top surface of the foaming slag 8 is expressed by the following formula:

$$H_1 = H_2 \times \gamma_2 / \gamma_1 \qquad (7)$$

wherein $\gamma_1$ is the specific gravity of a repressed slag 24 in a slag pool 10, and $\gamma_2$ is the specific gravity of the foaming slag 8 within the furnace.

Since foams are convected in the foaming slag 8 with CO gas generated therein by the reactions of the formulas (1), (2) and (3), the specific gravity $\gamma_1$ of the foaming slag (8) situated within the furnace and above the lower tuyeres 13 becomes from 1/2 to 1/3 of the specific gravity $\gamma_2$ of the repressed slag 24 in the slag pool 10. Accordingly, the present inventors have confirmed that the height $H_2$ from the lower tuyeres 13 to the top surface of the foaming slag 8 becomes from twice to three times the height $H_1$ from the lower tuyeres 13 to the tapping hole 12 by conducting test operations, etc.

Since a height $H_3$ from the lower tuyeres 13 to the tips of he lances 26 and 27 is set as follows: $H_1 < H_3$, the tips of the lance 26 for blowing the carbon material and the lance 27 for blowing the iron raw material are to be provided above the lower tuyeres 13. Moreover, since the height $H_3$ from the lower tuyeres 13 to the tips of the upper tuyeres 14 is set as follows: $H_3 < 3 \times H_1$, namely $H_3 < H_2$, the tips of the lance 26 for blowing the carbon material and the lance 27 for blowing the iron raw material are to be provided on the top surface side of the foaming slag 8 within the furnace. Accordingly, as a result of setting the height $H_3$ from the lower tuyeres 13 to the tips of the upper tuyeres 14 as follows: $H_1 < H_3 < 3 \times H_1$, the tips of the lance 26 for blowing the carbon material and the lance 27 for blowing the iron raw material are to be provided at sites above the lower tuyeres 13 and up to the height corresponding to the top surface of the foaming slag 8 within the furnace.

Example 13

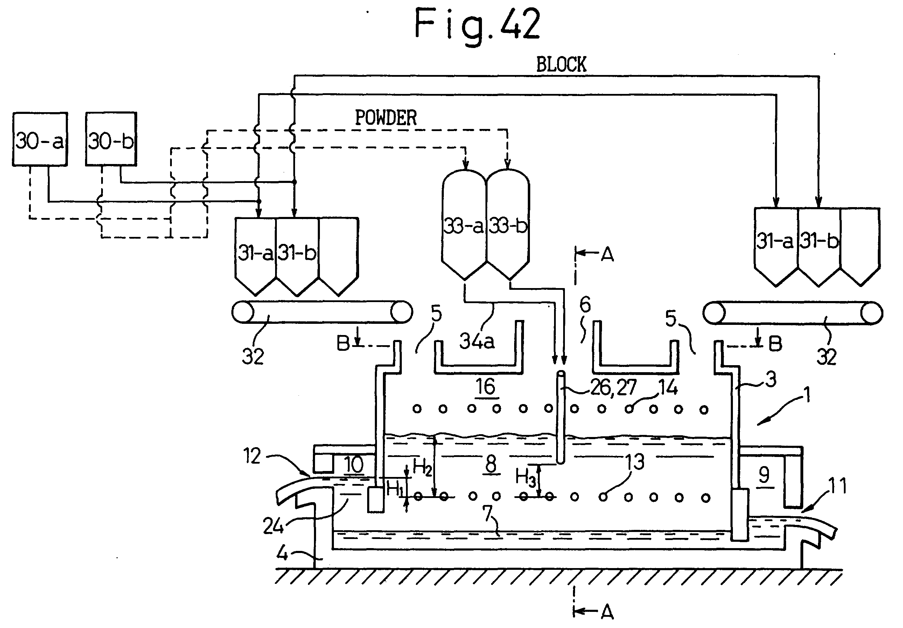

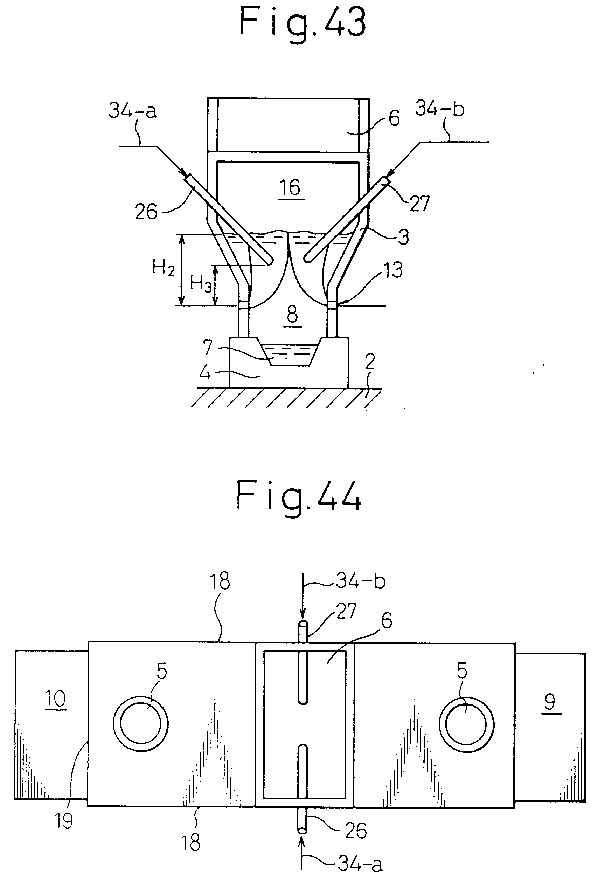

Fig. 42 is a vertical sectional view showing a furnace structure in another embodiment of the smelting reduction apparatus according to the sixth invention. Fig. 43 is a sectional view along line A-A in Fig. 42. Fig. 44 is a sectional view along line B-B in Fig. 42.

In the smelting reduction apparatus wherein a metal raw material, a carbon material and a flux are charged into a furnace 1, and a molten pig iron 7 is directly produced, oxygen and/or oxygen-enriched gas is blown into a foaming slag 8 through lower tuyeres 13 which are provided in such a manner that the tuyeres penetrate longer sides 18 of the furnace having a rectangular horizontal section in the horizontal direction directed toward the slag. Two raw material charging inlets 5 are provided at both ends in the longer side direction on the top surface of the furnace, respectively. A gas outlet 6 for a combustible gas generated from the furnace is provided at the center in the longer side direction on the top surface of the furnace.

A lance 26 for blowing the carbon material in powder form and a lance 27 for blowing the iron raw material in powder form are provided on the longer sides 18 in the central portion in the longer side direction, and each inserted into the foaming slag 8 obliquely. The tips of the lance 26 for blowing the carbon material and the lance 27 for blowing the iron raw material are provided at sites above the lower tuyeres 13 and up to the height corresponding to the top surface of the foaming slag 8.

Since a height $H_3$ from the lower tuyeres 13 to the tips of the lances 26 and 27 is set as follows: $H_1 < H_3 < 3 \times H_1$ also in the present example, the tips of the lance 26 for blowing the carbon material and the lance 27 for blowing the iron raw material are to be provided at sites above the lower tuyeres 13 and up to the height corresponding to the top surface of the foaming slag 8 within the furnace.

Although the present examples have been explained by making reference to the production of iron by reduction, it is needless to say that the present invention may also be applied to smelting reduction apparatuses for producing a nonferrous metal and a ferrous alloy such as chromium, nickel and manganese by smelting reduction methods similar to those mentioned above.

As explained above, effects as described below are achieved in the sixth invention.

* Lances for blowing a carbon material and/or iron raw material in powder are provided and the tips of the lances are arranged at sites above the lower tuyeres and up to the height corresponding to the top surface of the slag within the furnace so that the carbon material and/or iron raw material are blown into the slag. As a result, the carbon material and/or iron raw material in powder form is melted and reacted in the slag and does not float on the top surface of the slag, and the proportion thereof carried away by the ascending current of a combustible gas generated from the slag is significantly decreased. Consequently, the yield of the carbon material and/or iron raw material is significantly improved.

* Only a single raw material charging inlet is provided at one end in the longer side direction on the top surface of the furnace, and lances for blowing the carbon material and/or iron raw material in powder form are provided on the other end in the longer side direction on the top surface of the furnace. As a result, the concentrations of the iron raw material and the carbon material in the slag are made homogeneous in the longer side direction, and the number of the raw material charging inlets may be made one even when the production amount is increased, that is, the longer sides of the furnace having a rectangular horizontal section are extended. Accordingly, the number of the raw material charging apparatus becomes one, and the installation cost is reduced.

* Since only a single raw material charging inlet is provided, the distance between the raw material charging inlet and the gas outlet may be increased. As a result, even when the particle sizes of the metal raw material and the carbon material are small , an increase in the amounts of the metal raw material and the carbon material which enter the flow of the combustible gas generated from the furnace and are directly scattered can be prevented.

* Oxygen and/or oxygen-enriched gas is blown into the slag through the lower tuyeres which are provided in such a manner that the tuyeres penetrate the side walls of the furnace in the horizontal direction toward the slag, without blowing oxygen-containing gas toward the molten pig iron through the bottom tuyeres, and the slag alone is stirred. As a result, particles of the molten pig iron are neither blown into or above the slag, nor reoxidized with oxygen or oxygen-enriched gas blown through the upper tuyeres. Accordingly, the reduction rate, namely the production rate is improved, and the amount of a metal component scattered together with the combustible gas is decreased.

* Since particles of the molten metal are not suspended in the slag, the heat content and the heat conductivity of the slag are low, and the furnace walls can be made water-cooled structures. Moreover, the furnace has no tuyeres below the surface of the metal bath. Accordingly, the unit retirement of the refractories and the frequency of repairing are significantly decreased.

## Claims

1. A furnace structure of a smelting reduction apparatus for directly producing a molten metal by charging a metal raw material, a carbon material and a flux into the furnace having a rectangular horizontal section, and blowing oxygen and/or oxygen-enriched gas into a slag through lower tuyeres provided in such a manner that the lower tuyeres penetrate the two longer sides of the rectangular furnace in the horizontal direction toward the slag, characterized in that bottom tuyeres are provided near the central portion in the shorter side direction of the furnace bottom, through which tuyeres an inert gas is blown into the molten metal.

2. The furnace structure of a smelting reduction apparatus according to claim 1, characterized in that the length $L_1$ in the shorter side direction of, the horizontal section of the furnace at the height of the lower tuyeres is set as follows:

$$2 \times L_3 < L_1 \leq 2 \times (L_3 + H \times \tan \theta)$$

where H is the total height of the molten metal and the slag, $L_3$ is a coverage in the horizontal direction of the gas blown into the slag through the lower tuyeres and $2\theta$ is a spread angle of the gas blown into the slag through the bottom tuyeres.

3. A furnace structure of a smelting reduction apparatus for directly producing a molten metal by charging a metal raw material, a carbon material and a flux into the furnace, and blowing oxygen and/or oxygen-enriched gas into a slag through lower tuyeres provided in such a manner that the lower tuyeres penetrate the sides of the furnace in the horizontal direction toward the slag, characterized in that lowest tuyeres are provided in such a manner that the tuyeres are located in the side wall portions of the furnace below the lower tuyeres and not lower than the position corresponding to the interface between the slag and the molten metal within the furnace and directed at a downward angle of 0 to 45° from the horizontal direction, and through which an inert gas is blown.

4. A furnace structure of a smelting reduction apparatus far directly producing a molten metal by charging a metal raw material, a carbon material and a flux into the furnace having a rectangular horizontal section, and blowing oxygen and/or oxygen-enriched gas into a slag through lower tuyeres provided in such a manner that the lower tuyeres penetrate the longer sides of the furnace in the horizontal direction toward the slag, characterized in that the lower tuyeres are directed in the lateral direction from the direction vertical to the longer sides of the furnace at an angle of 15 to 45° toward the direction opposite to that of a raw material charging inlet.

5. A furnace structure of a smelting reduction apparatus for directly producing a molten metal by charging a metal raw material, a carbon material and a flux into the furnace having a rectangular horizontal section, and blowing oxygen and/or oxygen-enriched gas into a slag through lower tuyeres provided in such a manner that the lower tuyeres penetrate the longer sides of the furnace in the horizontal direction toward the slag, characterized in that the spacing $L_5$ between two pairs of the lower tuyeres in the central portion in the longer side direction of the rectangular furnace is set as follows:

$$2 \times H \times \tan\theta < L_6 \leq 6 \times H \times \tan\theta$$

where H is the height from the lower tuyeres to the slag bath surface and $2\theta$ is a spread angle of the gas blown into the slag therethrough, and that the distance $L_2$ from the lower tuyeres situated most closely to the shorter side of the rectangular furnace to the shorter side thereof is set as follows:

$$L_2 \leq H \times \tan\theta$$

6. A furnace structure of a smelting reduction apparatus for directly producing a molten metal by charging a metal raw material, a carbon material and a flux into the furnace having a rectangular horizontal section, and blowing oxygen and/or oxygen-enriched gas into a slag through lower tuyeres provided in such a manner that the lower tuyeres penetrate the longer sides of the furnace in the horizontal direction toward the slag, characterized in that the spacing $L_1$ between adjacent lower tuyeres is set as follows:

$$2 \times H \times \tan\theta < L_1 \leq 4 \times H \times \tan\theta$$

where H is the height from the lower tuyeres to the slag bath surface, and $2\theta$ is a spread angle of the gas blown into the slag therethrough, and that the distance $L_2$ from the lower tuyeres situated most closely to the shorter side of the rectangular furnace to the shorter side thereof is set as follows:

$$L_2 \leq H \times \tan\theta$$

7. A furnace structure of a smelting reduction apparatus for directly producing a molten metal by charging a metal raw material, a carbon material and a flux into the furnace having a rectangular horizontal section, and blowing oxygen and/or oxygen-enriched gas into a slag through lower tuyeres provided in such a manner that the lower tuyeres penetrate the longer sides of the furnace in the horizontal direction toward the slag, characterized in that the length $L_5$ in the shorter side direction of the horizontal section of the furnace at the height of the lower tuyeres is set as follows:

$$2 \times L_4 < L_5 \leq 4 \times L_4$$

where $L_4$ is a coverage in the horizontal direction of the gas blown into the slag through the lower tuyeres, and that the longer sides of the rectangular furnace are formed with vertical walls.

8. A furnace structure of a smelting reduction apparatus for directly producing a molten metal by charging a metal raw material, a carbon material and a flux into the furnace having a rectangular horizontal section, and blowing oxygen and/or oxygen-enriched gas into a slag through lower tuyeres provided in such a manner that the lower tuyeres penetrate the longer sides of the furnace in the horizontal direction toward the slag, characterized in that nozzles for blowing a gas in the horizontal direction toward the slag are provided on the longer sides and/or shorter sides of the rectangular furnace at positions above the lower tuyeres and up to the top surface of the slag within the furnace.

9. A furnace structure of a smelting reduction apparatus for directly producing a molten metal by charging a metal raw material, a carbon material and a flux into the furnace having a rectangular horizontal section, and blowing oxygen and/or oxygen-enriched gas into a slag through lower tuyeres provided in such a manner that the lower tuyeres penetrate the longer sides of the furnace in the horizontal direction toward the slag, characterized in that the corners of the furnace having a rectangular horizontal section are chamfered or rounded.

10. The furnace structure of a smelting reduction apparatus according to claim 5, characterized in that the furnace structure comprises the features of the furnace structure thereof of claim 7.

11. The furnace structure of a smelting reduction apparatus according to claim 6, characterized in that the furnace structure comprises the features of the furnace structure thereof of claim 7.

12. The furnace structure of a smelting reduction apparatus according to claim 8, characterized in that the furnace structure comprises the features of the furnace structure thereof of claim 9.

13. The furnace structure of a smelting reduction apparatus according to claim 5, characterized in that the furnace structure comprises the features of the furnace structure thereof of either claim 8 or 9, or both claims 8 and 9.

14. The furnace structure of a smelting reduction apparatus according to claim 6, characterized in that the furnace structure comprises the features of the furnace structure thereof of either claim 8 or 9, or of both claims 8 and 9.

15. The furnace structure of a smelting reduction apparatus according to claim 7, characterized in that the furnace structure comprises the features of the furnace structure thereof of either claim 8 or 9, or of both claims 8 and 9.

16. A method for operating a smelting reduction apparatus for directly producing a molten metal by charging a metal raw material, a carbon material and a flux into the furnace lined with a water-cooled panel, blowing oxygen and/or oxygen-enriched gas into a slag through lower tuyeres provided in such a manner that the lower tuyeres penetrate the sides of the furnace in the horizontal direction toward the slag, and blowing simultaneously oxygen and/or oxygen-enriched gas through upper tuyeres and/or upper lances provided in such a manner that the upper tuyeres penetrate the furnace, characterized by comprising blowing oxygen and/or oxygen-enriched gas into the slag within the furnace through the upper tuyeres and/or tips of the upper lances which are arranged at sites above the lower tuyeres and up to the height corresponding to the top surface of the slag within the furnace.

17. A furnace structure of a smelting reduction apparatus for directly producing a molten metal by charging a metal raw material, a carbon material and a flux into the furnace lined with a water-cooled panel, blowing oxygen and/or oxygen-enriched gas into a slag through lower tuyeres provided in such a manner that the lower tuyeres penetrate the sides of the furnace in the horizontal direction toward the slag, and blowing simultaneously oxygen and/or oxygen-enriched gas through upper tuyeres and/or upper lances provided in such a manner that they penetrate the furnace, characterized in that the height $H_3$ from the lower tuyeres to the upper tuyeres and/or tips of the upper lances is set as follows:

$$H_1 < H_3 < 3 \times H_1$$

where $H_1$ is the height from the lower tuyeres to a cinder notch.

18. A method for operating a smelting reduction apparatus for directly producing a molten metal by charging a metal raw material, a carbon material and a flux into the furnace, characterized by comprising blowing oxygen and/or oxygen-enriched gas into a slag through lower tuyeres provided in such a manner that the tuyeres penetrate the respective two longer sides of the furnace having a rectangular horizontal section toward the slag, and blowing the carbon material and/or metal raw material into the slag within the furnace through lances provided in such a manner that the tips of the lances are arranged at sites above the lower tuyeres and up to the height corresponding to the top surface of the slag within the furnace.

19. The method for operating a smelting reduction apparatus according to claim 18, characterized in that the carbon material and/or metal raw material is screened in advance, the carbon material and/or metal raw material in powder form is blown through the lances, and the carbon material and/or metal raw material in block form is charged through a raw material charging inlet provided above the furnace.

20. A furnace structure of a smelting reduction apparatus for directly producing a molten metal by charging a metal raw material, a carbon material and a flux into the furnace, characterized in that lower tuyeres are provided in such a manner that the tuyeres penetrate the respective two longer sides of the furnace having a rectangular horizontal section toward the slag and lances provided in such a manner that the tips of the lances are arranged at sites above the lower tuyeres and up to the height corresponding to the top surface of the slag within the furnace, and the height $H_3$ from the lower tuyeres to the upper tuyeres and/or tips of the upper lances being set as follows:

$$H_1 < H_3 < 3 \times H_1$$

where $H_1$ is the height from the lower tuyeres to a cinder notch.

21. The furnace structure of a smelting reduction apparatus according to claim 20, characterized in that one raw material charging inlet is provided at one end in the longer side direction on the top surface of the furnace, and lances for blowing the carbon material and/or metal raw material in powder form are provided on the other end in the longer side direction.

22. The furnace structure of a smelting reduction apparatus according to claim 20, characterized in that two raw material charging inlets are provided at both ends in the longer side direction on the top surface of the furnace, and lances for blowing the carbon material and/or metal raw material in powder form are provided at the center in the longer side direction.

# Fig.1

# Fig.2

# Fig.3
## PRIOR ART

# Fig.4
## PRIOR ART

# Fig.5

# Fig.6

# Fig.7

# Fig.8

# Fig.9

PRIOR ART

# Fig.10

# Fig.11

# Fig.12

# Fig.13
## PRIOR ART

# Fig.14
## PRIOR ART

# Fig.15
## PRIOR ART

Fig.16

# Fig.17

# Fig.18

# Fig.19

# Fig.20

45

# Fig.21

# Fig.22

# Fig. 23

# Fig. 24

# Fig. 25

# Fig.26

# Fig.27

# Fig.28
## PRIOR ART

# Fig.29
PRIOR ART

# Fig.30
PRIOR ART

# Fig.31

# Fig.32

# Fig.33

# Fig.34

EP 0 905 260 A1

# Fig.35

# Fig.36

54

# Fig.37
## PRIOR ART

# Fig.38
## PRIOR ART

Fig.39

# Fig.40

# Fig.41

Fig. 42

# Fig.43

# Fig.44

**INTERNATIONAL SEARCH REPORT**

| International application No. |
|---|
| PCT/JP97/01142 |

### A. CLASSIFICATION OF SUBJECT MATTER
Int. Cl$^6$ C21B11/00

According to International Patent Classification (IPC) or to both national classification and IPC

### B. FIELDS SEARCHED

Minimum documentation searched (classification system followed by classification symbols)
Int. Cl$^6$ C21B11/00

Documentation searched other than minimum documentation to the extent that such documents are included in the fields searched

| | | |
|---|---|---|
| Jitsuyo Shinan Koho | 1926 – 1996 | Jitsuyo Shinan Toroku |
| Kokai Jitsuyo Shinan Koho | 1971 – 1997 | Koho 1996 – 1997 |
| Toroku Jitsuyo Shinan Koho | 1994 – 1997 | |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br><br>A | JP, 1-502276, A (Moskovsky Institut Stali I Splavov),<br>August 10, 1989 (10. 08. 89),<br>Page 1, lower left column to page 2, lower right column; Figs. 1 to 7<br>& EP, 302111, A1 & US, 4913734, A | 1, 3, 8,<br>16, 18, 19<br>2, 4-7,<br>9-15, 17,<br>20-22 |
| Y | JP, 62-247013, A (Nippon Steel Corp.),<br>October 28, 1987 (28. 10. 87),<br>Page 4, upper left column, line 7 to upper right column, line 12 (Family: none) | 1 |
| Y | JP, 2-179806, A (NKK Corp.),<br>July 12, 1990 (12. 07. 90),<br>Page 1, lower left column to page 2, upper right column; Fig. 7 (Family: none) | 1, 3, 8 |
| Y | JP, 62-280314, A (NKK Corp.),<br>December 5, 1987 (05. 12. 87),<br>Page 1, lower left column; page 2, upper left column, line 15 to upper right column, line 17; | 16, 18, 19 |

[X] Further documents are listed in the continuation of Box C.   [ ] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| June 26, 1997 (26. 06. 97) | July 8, 1997 (08. 07. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

International application No.

PCT/JP97/01142

C (Continuation).   DOCUMENTS CONSIDERED TO BE RELEVANT

| Category* | Citation of document, with indication, where appropriate, of the relevant passages | Relevant to claim No. |
|---|---|---|
|  | Fig. 1 (Family: none) |  |
| Y | JP, 62-224619, A (Nippon Steel Corp.), October 2, 1987 (02. 10. 87), Page 1, lower left column, lines 4 to 9; page 2, lower right column, line 19 to page 3, upper left column, line 1; lines 14 to 16 (Family: none) | 19 |

Form PCT/ISA/210 (continuation of second sheet) (July 1992)